# EUROPÄISCHE PATENTSCHRIFT

(11) **EP 3 771 764 B1**
(45) Veröffentlichungstag und Bekanntmachung des Hinweises auf die Patenterteilung: **09.02.2022**
(21) Anmeldenummer: 19189231.4
(22) Anmeldetag: 30.07.2019
(51) Int. Cl.: D04H 3/02, B32B 5/26, D04H 3/147, D04H 3/16

(54) **VORRICHTUNG UND VERFAHREN ZUR HERSTELLUNG EINES VLIESSTOFFES**
METHOD AND DEVICE FOR PRODUCING A NONWOVEN FABRIC
DISPOSITIF ET PROCÉDÉ DE FABRICATION D'UN TISSU NON TISSÉ

(43) Veröffentlichungstag der Anmeldung: 03.02.2021
(73) Patentinhaber: Reifenhäuser GmbH & Co. KG Maschinenfabrik, 53844 Troisdorf (DE)
(72) Erfinder: WAGNER, Tobias, 50823 Köln (DE); SOMMER, Sebastian, 53844 Troisdorf (DE); BOHL, Patrick, 53773 Hennef (DE); RÖSNER, Andreas, 53129 Bonn (DE); GEUS, Hans Georg, 53859 Niederkassel (DE)
(74) Vertreter: Andrejewski - Honke Patent- und Rechtsanwälte Partnerschaft mbB

(56) Entgegenhaltungen:
- EP-A1- 0 696 333
- WO-A1-2018/064595
- WO-A2-02/18693
- US-A1- 2002 090 499
- US-A1- 2005 020 170

## Beschreibung

Die Erfindung betrifft eine Vorrichtung zur Herstellung eines Vliesstoffes mit zumindest einer Vliesbahn, wobei zumindest eine Spinneinrichtung bzw. zumindest ein Spinnbalken zum Erspinnen von Fasern vorhanden ist und wobei ein Ablageförderer - insbesondere ein Ablagesiebband - vorgesehen ist, auf dem die Fasern zur Vliesbahn ablegbar sind. Die Erfindung betrifft weiterhin auch ein Verfahren zur Herstellung eines entsprechenden Vliesstoffes. - Als Fasern werden im Rahmen der Erfindung insbesondere Fasern aus thermoplastischem Kunststoff eingesetzt und vorzugsweise Endlosfilamente aus thermoplastischem Kunststoff. Endlosfilamente unterscheiden sich aufgrund ihrer quasi endlosen Länge von Stapelfasern, die viel geringere Längen von beispielsweise 10 mm bis 60 mm aufweisen. Bei den im Rahmen der Erfindung eingesetzten Endlosfilamenten handelt es sich insbesondere um mit einer Spunbond-Vorrichtung bzw. mit einem Spunbond-Verfahren hergestellte Endlosfilamente, vorzugsweise aus thermoplastischem Kunststoff.

Vorrichtungen und Verfahren der eingangs genannten Art sind aus der Praxis in unterschiedlichen Ausführungsformen bekannt. So ist es bekannt, Endlosfilamente auf einem Ablagesiebband zur Vliesbahn abzulegen, diese einer Vorverfestigung zu unterziehen und anschließend eine Endverfestigung der Vliesbahn durchzuführen. Die Vorverfestigung kann beispielsweise mit Hilfe von Kompaktierwalzen erfolgen und die Endverfestigung insbesondere in einem Heißluftofen (through air bonding). Weiterhin ist es auch bekannt, dass im Ablagebereich der Fasern auf dem Ablagesiebband Luft bzw. Prozessluft durch das Ablagesiebband gesaugt wird. Die Vorverfestigung und die Endverfestigung finden bei vielen bekannten Vorrichtungen auf demselben Ablageförderer bzw. auf demselben Ablagesiebband statt. - Der Erfindung liegt die Erkenntnis zugrunde, dass diese Durchführung aller Verfestigungsmaßnahmen auf dem gleichen Ablageförderer nicht immer vorteilhaft ist.

Für bestimmte Anwendungen sind sogenannte High-Loft-Produkte sehr bevorzugt. Dabei handelt es sich um Vliesstoffe bzw. Spinnvliese mit einer relativ großen Dicke und einer hohen Weichheit. Die Herstellung dieser High-Loft-Produkte mit den gewünschten Eigenschaften ist nicht immer einfach, zumal die Vliesstoffe auch verfestigt werden müssen und die Verfestigungen Beeinträchtigungen der Dicke und/oder der Weichheit bedingen. Von daher besteht hier ein Zielkonflikt von einerseits hoher Weichheit und Dicke und andererseits ausreichender Festigkeit bzw. Abriebsfestigkeit der Vliesstoffe. Die bislang bekannten Vorrichtungen und Verfahren haben in dieser Hinsicht oftmals keine zufriedenstellenden Ergebnisse gebracht.

WO 2018/064595 beschreibt eine Vorrichtung zur Erzeugung von Vliesstoffen mit Spinneinrichtung und Ablageförderer. Bei dieser Vorrichtung sind zwei Ablageförderer hintereinander geschaltet. Die Festigkeit in Maschinenrichtung der Vliesbahn vor der Übergabe an den weiteren Förderer sowie die Temperatur der Oberfläche des weiteren Förderers vor der Heißluft-Endverfestigungseinrichtung sind nicht offenbart.

Demgegenüber liegt der Erfindung das technische Problem zugrunde, eine Vorrichtung der eingangs genannten Art anzugeben, mit der eine vorteilhafte Vorverfestigung und auch eine optimale Endverfestigung von Vliesstoffen erzielt werden kann und mit der außerdem bei Bedarf auch ein Vliesstoff von hoher Dicke und hoher Weichheit problemlos hergestellt werden kann. Der Erfindung liegt weiterhin das technische Problem zugrunde, ein entsprechendes Verfahren zur Herstellung eines solchen Vliesstoffes anzugeben.

Zur Lösung dieses technischen Problems lehrt die Erfindung eine Vorrichtung zur Herstellung eines Vliesstoffes mit zumindest einer Vliesbahn, wobei zumindest eine Spinneinrichtung bzw. zumindest ein Spinnbalken zum Erspinnen von Fasern vorhanden ist, wobei ein Ablageförderer - insbesondere ein Ablagesiebband - vorgesehen ist, auf dem die Fasern zur Vliesbahn ablegbar sind, wobei zumindest eine Heißluft-Vorverfestigungseinrichtung zur Heißluft-Vorverfestigung der Vliesbahn auf dem Ablageförderer bzw. auf dem Ablagesiebband vorgesehen ist, wobei in Förderrichtung der Vliesbahn hinter dem Ablageförderer bzw. hinter dem Ablagesiebband ein weiterer Förderer - insbesondere in Form eines Förderbandes - zur Aufnahme der vorverfestigten Vliesbahn von dem Ablageförderer angeordnet ist, wobei zumindest eine Endverfestigungseinrichtung - insbesondere zumindest eine Heißluft-Endverfestigungseinrichtung - zur Endverfestigung bzw. zur Heißluft-Endverfestigung der Vliesbahn auf dem weiteren Förderer bzw. auf dem Förderband vorgesehen ist, wobei die Heißluft-Vorverfestigung der Vliesbahn auf dem Ablageförderer bzw. auf dem Ablagesiebband mit der Maßgabe durchführbar ist, dass die Vliesbahn vor der Übergabe an den weiteren Förderer bzw. an das Förderband eine Festigkeit in Maschinenrichtung (MD) von 0,5 bis 5 N/5 cm, insbesondere von 0,7 bis 3,5 N/5 cm und vorzugsweise von 0,8 bis 3,5 N/5 cm aufweist. - Maschinenrichtung (MD) meint im Rahmen der Erfindung insbesondere die Förderrichtung des Ablageförderers bzw. die Förderrichtung der Vliesbahn,
und wobei die Temperatur der Oberfläche des weiteren Förderers - insbesondere des Förderbandes - in Förderrichtung vor der Heißluft-Endverfestigungseinrichtung höher ist als die Temperatur der Oberfläche des Ablageförderers bzw. des Ablagesiebbandes im Übergabebereich der Vliesbahn bzw. des Laminates an den weiteren Förderer.

Der erfindungsgemäß hergestellte Vliesstoff kann lediglich eine Vliesbahn bzw. eine Vlieslage aufweisen oder er kann auch mehrere übereinander angeordnete Vliesbahnen bzw. Vlieslagen aufweisen, die zum Vlieslaminat kombiniert werden. Wenn mehrere Vliesbahnen übereinander angeordnet werden, ist zweckmäßigerweise jeder Vliesbahn eine Spinneinrichtung bzw. ein Spinnbalken zugeordnet. In der Regel entspricht die Anzahl der hintereinander angeordneten Spinneinrichtungen bzw. Spinnbalken der Anzahl der Vliesbahnen bzw. Vlieslagen, die übereinander zu dem Vlieslaminat kombiniert werden.

Der Ablageförderer bzw. das Ablagesiebband ist insbesondere als endlos umlaufendes Ablagesiebband ausgebildet. Zweckmäßigerweise ist der Förderer bzw. das Förderband als endlos umlaufendes Förderband ausgeführt. Es liegt im Rahmen der Erfindung, dass der Ablageförderer bzw. das Ablagesiebband luftdurchlässig zum Durchsaugen von Prozessluft ausgebildet ist. Grundsätzlich liegt es auch im Rahmen der Erfindung, dass der weitere Förderer bzw. das Förderband luftdurchlässig ausgeführt sein kann. - Prinzipiell kann der weitere Förderer im Übrigen auch als Walze oder Trommel oder dergleichen ausgebildet sein.

Erfindungsgemäß werden für die Vorverfestigung der Vliesbahn einerseits und für die Endverfestigung der Vliesbahn andererseits separate Förderer eingesetzt, nämlich der Ablageförderer bzw. das Ablagesiebband für die Heißluft-Vorverfestigung und der weitere Förderer bzw. das Förderband für die Endverfestigung bzw. die Heißluft-Endverfestigung. Der Erfindung liegt insoweit die Erkenntnis zugrunde, dass diese Auftrennung der Förderer für die Vorverfestigung zum einen und für die Endverfestigung zum anderen für den herzustellenden Vliesstoff überraschenderweise besonders vorteilhaft ist und insbesondere auch zu Vorteilen bei der Verfahrensführung zur Herstellung des Vliesstoffes führt. Das gilt vor allem für Vliesstoffe mit geringeren Flächengewichten und/oder für die Herstellung von Vliesstoffen bei höheren Produktionsgeschwindigkeiten.

Der Erfindung liegt unter anderem die Erkenntnis zugrunde, dass die erfindungsgemäße Vorrichtung und ein mit der erfindungsgemäßen Vorrichtung durchgeführtes Verfahren in energetischer Hinsicht besonders vorteilhaft sind. Bei den aus dem Stand der Technik bekannten Anlagen, bei denen die Vorverfestigung und die Endverfestigung auf demselben Ablagesiebband durchgeführt werden, stellen sich zwangsläufig relativ hohe Energieverluste ein. In der Heißluft-Endverfestigungseinrichtung wird der Vliesstoff bzw. das Siebband auf relativ hohe Temperaturen erwärmt. Das endlos umlaufende Ablagesiebband wird anschließend wieder durch den Ablagebereich für die Fasern geführt, in dem Prozessluft durch das Ablagesiebband gesaugt wird und dieses folglich relativ deutlich abgekühlt wird. Dieses abgekühlte Siebband muss anschließend wieder in energetisch aufwendiger Weise in der Endverfestigungseinrichtung aufgeheizt werden. Damit sind beachtliche Energieverluste verbunden, die mit höheren Produktionsgeschwindigkeiten - beispielsweise in Mehrbalken-Anlagen - noch weiter steigen. Diese werden im Rahmen der erfindungsgemäßen Lehre vorteilhaft vermieden.

Die erfindungsgemäße Vorrichtung eignet sich auch besonders gut für die Herstellung von High-Loft-Produkten. Mit der Vorrichtung ist es möglich, einen optimalen Kompromiss zwischen ausreichender Dicke und hoher Weichheit des Vliesstoffes und zudem einer zufriedenstellenden Festigkeit des Vliesstoffes zu erreichen. Dabei liegt der Erfindung die Erkenntnis zugrunde, dass der Vliesstoff nach der Vorverfestigung eine Festigkeit in Maschinenrichtung (MD) in dem erfindungsgemäß beanspruchten Intervall haben sollte. Im Ergebnis können voluminöse und weiche Vliesstoffe mit einer optimalen Festigkeit erzielt werden.

Besonders bewährt hat sich die erfindungsgemäße Lehre bzw. die erfindungsgemäße Vorrichtung bei Vlieslaminaten aus zumindest zwei Vliesbahnen bzw. aus mehr als zwei Vliesbahnen, wobei diese Vlieslaminate mit einer Zwei-Balken-Anlage oder mit einer Mehrbalken-Anlage hergestellt werden.

Nach besonders bevorzugter Ausführungsform der Erfindung ist der Vliesstoff ein Vlieslaminat aus zumindest zwei Vliesbahnen, wobei zumindest zwei Spinneinrichtungen bzw. Spinnbalken zur Erzeugung der Fasern für diese Vliesbahnen vorgesehen sind,
wobei eine erste Spinneinrichtung bzw. ein erster Spinnbalken zum Erspinnen von ersten Fasern vorhanden ist, wobei die ersten Fasern auf dem Ablageförderer bzw. auf dem Ablagesiebband zu einer ersten Vliesbahn ablegbar sind,
wobei eine zweite Spinneinrichtung bzw. ein zweiter Spinnbalken zum Erspinnen von zweiten Fasern vorhanden ist, wobei der zweite Spinnbalken dem ersten Spinnbalken in Förderrichtung des Ablageförderers nachgeschaltet ist und wobei die zweiten Fasern auf dem Ablageförderer bzw. auf der ersten Vliesbahn zur zweiten Vliesbahn ablegbar sind,
wobei zwischen dem ersten und dem zweiten Spinnbalken zumindest eine Heißluft-Vorverfestigungseinrichtung als zumindest eine erste Heißluft-Vorverfestigungseinrichtung zur Heißluft-Vorverfestigung der ersten Vliesbahn vorgesehen ist,
wobei in Förderrichtung der Faserablage nach dem zweiten Spinnbalken zumindest eine zweite Heißluft-Vorverfestigungseinrichtung zur Heißluft-Vorverfestigung der zweiten Vliesbahn bzw. des Laminates aus erster und zweiter Vliesbahn angeordnet ist,
wobei das Laminat von dem Ablageförderer an den weiteren Förderer, insbesondere in Form des Förderbandes übergebbar ist bzw. übergeben wird, wobei das Laminat mit der Endverfestigungseinrichtung, insbesondere mit der Heißluft-Endverfestigungseinrichtung auf dem weiteren Förderer endverfestigt wird
und wobei die Heißluft-Vorverfestigung der ersten Vliesbahn bzw. des Laminates auf dem Ablageförderer mit der Maßgabe durchführbar ist, dass das Laminat vor der Übergabe an den weiteren Förderer eine Festigkeit in Maschinenrichtung (MD) von 0,5 bis 5 N/5 cm, insbesondere von 0,7 bis 3,5 N/5 cm und vorzugsweise von 0,8 bis 3,5 N/5 cm aufweist.

Wenn im Rahmen der Erfindung zwei oder mehr Spinneinrichtungen bzw. Spinnbalken eingesetzt werden und zwei oder mehr Vliesbahnen für ein erfindungsgemäßes Vlieslaminat erzeugt werden, liegt es im Rahmen der Erfindung, dass jeder Spinneinrichtung bzw. jedem Spinnbalken zumindest eine Heißluft-Vorverfestigungseinrichtung zur Heißluft-Vorverfestigung der Vliesbahn bzw. des Vliesbahnaggregates nachgeschaltet ist. Weiterhin liegt es im Rahmen der Erfindung, dass die Ablage der Fasern für die einzelnen Vliesbahnen und die Heißluft-Vorverfestigungen auf ein und demselben Ablageförderer bzw. Ablagesiebband durchgeführt werden. Die Endverfestigung findet im Anschluss daran auf dem weiteren Förderer bzw. auf dem Förderband statt. - Grundsätzlich liegt es auch im Rahmen der Erfindung, dass bei Erzeugung lediglich einer Vliesbahn oder bei der Erzeugung mehrerer Vliesbahnen mit mehreren Spinnbalken zwischen dem Ablageförderer und dem weiteren Förderer zumindest ein Zwischenförderer bzw. zumindest ein Zwischenförderband zwischengeschaltet ist. In diesem Fall ist die erfindungsgemäße Lehre vorzugsweise so zu verstehen, dass die einzelne Vliesbahn bzw. das Vliesbahnaggregat vor der Übergabe auf den zumindest einen Zwischenförderer die Festigkeit in Maschinenrichtung (MD) in dem beanspruchten Intervall aufweist. Bei dem Zwischenförderer kann es sich im Übrigen auch um eine Walze bzw. Umlenkwalze, eine Rolle, eine Trommel oder dergleichen handeln.

Es liegt im Rahmen der Erfindung, dass zumindest eine Spinneinrichtung bzw. zumindest ein Spinnbalken der erfindungsgemäßen Vorrichtung bzw. die zumindest einer Spinneinrichtung bzw. zumindest einem Spinnbalken zugeordnete Vorrichtungskomponente der erfindungsgemäßen Vorrichtung als Spunbond-Vorrichtung zur Erzeugung einer Spunbond-Vliesbahn aus Endlosfilamenten ausgebildet ist. Gemäß einer Ausführungsform der Erfindung sind alle Spinneinrichtungen bzw. Spinnbalken und somit die entsprechenden Vorrichtungskomponenten jeweils als Spunbond-Vorrichtung zur Erzeugung von Spunbond-Vliesbahnen mit Endlosfilamenten ausgeführt.

Eine ganz besonders bevorzugte Ausführungsform der Erfindung ist dadurch gekennzeichnet, dass zumindest eine der Spinneinrichtungen bzw. zumindest einer der Spinnbalken zur Erzeugung von Bikomponentenfasern bzw. Multikomponentenfasern und insbesondere zur Erzeugung von Bikomponentenfilamenten bzw. Multikomponentenfilamenten eingerichtet ist. Gemäß einer empfohlenen Ausführungsform der Erfindung sind alle Spinneinrichtungen bzw. alle Spinnbalken der erfindungsgemäßen Vorrichtung zur Erzeugung von Bikomponentenfasern/Multikomponentenfasern, insbesondere von Bikomponentenfilamenten/Multikomponentenfilamenten eingerichtet. - Es liegt weiterhin im Rahmen der Erfindung, dass die Vorrichtung zur Herstellung zumindest eines Vliesstoffes bzw. zumindest einer Vliesbahn aus gekräuselten Fasern bzw. aus gekräuselten Endlosfilamenten ausgebildet ist. Vorzugsweise ist zumindest eine Spinneinrichtung bzw. zumindest ein Spinnbalken zur Erzeugung von gekräuselten Fasern bzw. zur Erzeugung von gekräuselten Endlosfilamenten eingerichtet. Bei Einsatz mehrerer Spinnbalken für die erfindungsgemäße Vorrichtung ist zumindest ein Spinnbalken oder sind zumindest zwei Spinnbalken oder sind alle Spinnbalken für die Erzeugung von gekräuselten Fasern bzw. von gekräuselten Endlosfilamenten eingerichtet.

Der Ausführungsform der erfindungsgemäßen Vorrichtung bzw. des erfindungsgemäßen Verfahrens für die Erzeugung mindestens einer Vliesbahn aus gekräuselten Fasern bzw. Endlosfilamenten kommt besondere Bedeutung zu. Auf diese Weise kann sehr einfach ein High-Loft-Vliesstoff erzeugt werden. Dabei liegt der Erfindung die Erkenntnis zugrunde, dass die vorteilhaften Eigenschaften eines solchen High-Loft-Produktes überraschenderweise aufgrund des Aufbaus der erfindungsgemäßen Vorrichtung bzw. aufgrund der Durchführung des erfindungsgemäßen Verfahrens beibehalten werden können und nichtsdestoweniger eine effektive Verfahrensführung mit einer ausreichenden Festigkeit der Vliesbahn bzw. der Vliesbahnen möglich ist. Zur Erzeugung von gekräuselten Fasern bzw. Endlosfilamenten können im Rahmen der Erfindung Fasern bzw. Endlosfilamente mit exzentrischer Kern-Mantel-Konfiguration oder mit Seite-an-Seite-Konfiguration eingesetzt werden. Dabei werden Fasern bzw. Endlosfilamente mit exzentrischer Kern-Mantel-Konfiguration bevorzugt. Diese letztgenannten Fasern haben sich für die erfindungsgemäße Vorrichtung bzw. für das erfindungsgemäße Verfahren besonders bewährt. Eine sehr bevorzugte Ausführungsform von im Rahmen der Erfindung eingesetzten Endlosfilamenten mit exzentrischer Kern-Mantel-Konfiguration wird weiter unten noch näher erläutert.

Eine sehr zweckmäßige Ausgestaltung der Erfindung ist dadurch gekennzeichnet, dass für die mit zumindest einem Spinnbalken ersponnenen Fasern bzw. Filamente zumindest eine Kühlvorrichtung zur Kühlung der Fasern sowie zumindest eine an die Kühlvorrichtung anschließende Verstreckeinrichtung zur Verstreckung der Fasern vorgesehen ist. Vorteilhafterweise schließt an die Verstreckeinrichtung in Strömungsrichtung der Fasern/Filamente zumindest ein Diffusor an. Eine sehr empfohlene Ausführungsform der Erfindung ist dadurch gekennzeichnet, dass das Aggregat aus der Kühlvorrichtung und der Verstreckeinrichtung als geschlossenes Aggregat ausgebildet ist und dass in dieses Aggregat außer der Zufuhr von Kühlluft in der Kühlvorrichtung keine weitere Luft von außen zugeführt wird. Zweckmäßigerweise werden die den Diffusor verlassenden Fasern/Filamente unmittelbar auf dem Ablageförderer bzw. auf dem Ablagesiebband abgelegt.

Eine besonders bewährte Ausführungsform der Erfindung ist dadurch gekennzeichnet, dass die Heißluft-Vorverfestigungseinrichtung bzw. eine Heißluft-Vorverfestigungseinrichtung in Form zumindest eines Heißluftmessers und/oder in Form zumindest eines Heißluftofens ausgebildet ist. - Wenn zwei oder mehr Spinnbalken im Rahmen der erfindungsgemäßen Vorrichtung eingesetzt werden, ist vorzugsweise die erste Heißluft-Vorverfestigungseinrichtung zwischen dem ersten Spinnbalken und dem zweiten Spinnbalken in Form zumindest eines ersten Heißluftmessers und/oder in Form zumindest eines ersten Heißluftofens ausgebildet. Zweckmäßigerweise ist die zweite Heißluft-Vorverfestigungseinrichtung hinter dem zweiten Spinnbalken in Form zumindest eines zweiten Heißluftmessers und/oder in Form zumindest eines zweiten Heißluftofens ausgebildet.

Eine bewährte Ausführungsform der Erfindung ist dadurch gekennzeichnet, dass einer Vorrichtungskomponente mit einem Spinnbalken zunächst zumindest ein Heißluftmesser nachgeschaltet ist und dass diesem Heißluftmesser zumindest ein Heißluftofen nachgeschaltet ist. Dabei zeichnet sich eine Ausführungsform der Erfindung dadurch aus, dass dem Spinnbalken lediglich ein Heißluftmesser nachgeschaltet ist und dass diesem einen Heißluftmesser wiederum lediglich ein Heißluftofen nachgeschaltet ist.

Bei Einsatz mehrerer Spinneinrichtungen bzw. Spinnbalken im Rahmen der erfindungsgemäßen Vorrichtung ist vorzugsweise in Förderrichtung der ersten Vliesbahn dem ersten Spinnbalken zunächst zumindest ein erstes Heißluftmesser nachgeschaltet und ist diesem ersten Heißluftmesser vor dem zweiten Spinnbalken zumindest ein erster Heißluftofen nachgeschaltet. Fernerhin ist zweckmäßigerweise in Förderrichtung des Laminates dem zweiten Spinnbalken zunächst zumindest ein zweites Heißluftmesser nachgeschaltet und diesem zweiten Heißluftmesser ist wiederum zumindest ein zweiter Heißluftofen nachgeschaltet. Es liegt im Rahmen der Erfindung, dass die Vliesbahn bzw. das Vliesbahnlaminat vor der Übergabe an den weiteren Förderer bzw. an das Förderband als letzte Heißluft-Vorverfestigungseinrichtung einen Heißluftofen verlassen hat.

Grundsätzlich sind im Rahmen der Erfindung auch andere Kombinationen von Heißluft-Vorverfestigungseinrichtungen möglich. So kann einem Spinnbalken oder bei einer Zwei-Balken-Anlage oder Mehrbalken-Anlage zumindest einem Spinnbalken auch lediglich ein Heißluftmesser als Heißluft-Vorverfestigungseinrichtung nachgeschaltet sein. Gemäß einer Ausführungsform ist einem ersten Spinnbalken ein Heißluftmesser nachgeschaltet und diesem Heißluftmesser ist wiederum ein Heißluftofen zur Vorverfestigung nachgeschaltet. Dem zweiten Balken ist bei dieser Ausführungsform lediglich ein Heißluftmesser als Heißluft-Vorverfestigungseinrichtung nachgeschaltet. Eine andere Ausführungsform ist dadurch gekennzeichnet, dass dem ersten Spinnbalken lediglich ein Heißluftmesser als Heißluft-Vorverfestigungseinrichtung nachgeschaltet ist und dass dem zweiten Spinnbalken ein Heißluftmesser nachgeschaltet ist und diesem Heißluftmesser wiederum ein Heißluftofen als Heißluft-Vorverfestigungseinrichtung nachgeschaltet ist. Nach einer anderen Ausführungsvariante könnte hinter jedem Spinnbalken auch lediglich ein Heißluftofen als Heißluft-Vorverfestigungseinrichtung angeordnet sein. Insoweit gibt es im Rahmen der Erfindung verschiedene Varianten für Kombinationen von Heißluft-Vorverfestigungseinrichtungen.

Eine empfohlene Ausführungsform der Erfindung ist dadurch gekennzeichnet, dass ein Heißluftmesser die Vliesbahn bzw. das Laminat mit Heißluft über einen Breitenbereich in Maschinenrichtung (MD) von 15 mm bis 300 mm, insbesondere von 30 mm bis 250 mm, vorzugsweise von 40 mm bis 200 mm und bevorzugt von 40 mm bis 150 mm beaufschlagt. Zweckmäßigerweise beträgt der Abstand der zumindest einen Heißluftdüse des Heißluftmessers zur Oberfläche des Ablageförderers bzw. des Ablagesiebbandes 2 mm bis 200 mm, insbesondere 3 mm bis 100 mm. Zweckmäßigerweise gelten die vorstehend genannten Breitenbereiche und Abstandsbereiche bei einer Mehrbalken-Anlage für jedes zur Heißluft-Vorverfestigungseinrichtung eingesetzte Heißluftmesser.

Weiterhin ist eine bewährte Ausführungsform der Erfindung dadurch gekennzeichnet, dass ein Heißluftofen die Vliesbahn bzw. das Laminat über einen Breitenbereich in Maschinenrichtung (MD) von 280 mm bis 2.000 mm, insbesondere von 290 mm bis 1.800 mm und vorzugsweise von 300 mm bis 1.500 mm mit Heißluft beaufschlagt. Empfohlenermaßen weisen die Heißluftaustrittsöffnungen des Heißluftofens zur Oberfläche des Ablageförders bzw. des Ablagesiebbandes einen Abstand von 12 mm bis 200 mm, insbesondere von 20 mm bis 150 mm und bevorzugt von 25 mm bis 120 mm auf. Zweckmäßigerweise gelten die vorgestehend genannten Breitenbereiche und/oder Abstandsbereiche bei einer Mehrbalken-Anlage für jeden zur Heißluft-Vorverfestigung eingesetzten Heißluftofen.

Es liegt im Rahmen der Erfindung, dass nach einem Heißluftmesser oder nach jedem Heißluftmesser und/oder dass nach einem Heißluftofen oder nach jedem Heißluftofen ein Kühlfeld angeordnet ist, in dem die Vliesbahn durch Kühlung stabilisiert wird. Zweckmäßigerweise ist ein solches Kühlfeld beispielsweise 400 mm bis 600 mm lang und wird z. B. von Kühlluft einer Geschwindigkeit von 1 bis 2 m/s durchströmt. Dadurch wird sowohl die Vliesbahn als auch der Ablageförderer gekühlt.

Die Temperatur der Oberfläche des weiteren Förderers bzw. des Förderbandes in Förderrichtung vor der Heißluft-Endverfestigungseinrichtung ist höher als die Temperatur der Oberfläche des Ablageförderers bzw. des Ablagesiebbandes im Übergabebereich der Vliesbahn bzw. des Laminates an den weiteren Förderer bzw. an das Förderband. Wenn nach einer Ausführungsvariante der Erfindung zwischen dem Ablageförderer und dem weiteren Förderer zumindest ein Zwischenförderer angeordnet ist, meint diese Ausführungsform insbesondere, dass die Temperatur der Oberfläche des weiteren Förderers, insbesondere des Förderbandes in Förderrichtung vor der Heißluft-Endverfestigungseinrichtung höher ist als die Temperatur der Oberfläche des Ablageförderers bzw. Ablagesiebbandes im Übergabebereich der Vliesbahn bzw. des Laminates an den Zwischenförderer und/oder höher ist als die Temperatur der Oberfläche des Zwischenförderers. Zweckmäßigerweise ist bei diesen Ausführungsformen die Oberflächentemperatur des weiteren Förderers bzw. des Förderbandes um mindestens 5 °C, vorzugsweise um mindestens 10 °C und bevorzugt um mindestens 15 °C sowie sehr bevorzugt um mindestens 20 °C höher als die genannte Oberflächentemperatur des Ablageförderers und/oder des Zwischenförderers. - Wenn im Rahmen der Erfindung ein Zwischenförderer eingesetzt wird, der lediglich Transportfunktion hat, ist zweckmäßigerweise die Oberflächentemperatur dieses Zwischenförderers geringer als die Oberflächentemperatur des weiteren Förderers und die Oberflächentemperatur des Zwischenförderers ist bevorzugt auch geringer als die Temperatur der Vliesbahn bzw. des Laminates beim Einlauf auf den Zwischenförderer.

Zur Lösung des technischen Problems lehrt die Erfindung weiterhin ein Verfahren zur Herstellung eines Vliesstoffes mit zumindest einer Vliesbahn, wobei Fasern ersponnen werden und auf einem Ablageförderer, insbesondere auf einem Ablagesiebband zu der Vliesbahn abgelegt werden, wobei die Vliesbahn auf dem Ablageförderer mit Heißluft vorverfestigt wird und wobei die Vliesbahn von dem Ablageförderer bzw. von dem Ablagesiebband an einen weiteren Förderer bzw. an ein Förderband übergeben wird und dort mit einer Heißluft-Endverfestigungseinrichtung endverfestigt wird, wobei die Heißluft-Vorverfestigung mit der Maßgabe durchgeführt wird, dass die Vliesbahn vor der Übergabe an den weiteren Förderer eine Festigkeit in Maschinenrichtung (MD) von 0,5 bis 5 N/5 cm, insbesondere von 0,7 bis 3,5 N/5 cm und vorzugsweise von 0,8 bis 3,5 N/5 cm aufweist und wobei die Temperatur der Oberfläche des weiteren Förderers - insbesondere des Förderbandes - in Förderrichtung vor der Heißluft-Endverfestigungseinrichtung höher ist als die Temperatur der Oberfläche des Ablageförderers bzw. des Ablagesiebbandes im Übergabebereich der Vliesbahn bzw. des Laminates an den weiteren Förderer.

Eine besonders bevorzugte Ausführungsform des erfindungsgemäßen Verfahrens ist dadurch gekennzeichnet, dass ein Vlieslaminat aus zumindest zwei Vliesbahnen erzeugt wird, wobei insbesondere zumindest eine Vliesbahn gekräuselte Fasern aufweist, wobei erste Fasern ersponnen werden und auf einem Ablageförderer, insbesondere auf einem Ablagesiebband zu einer ersten Vliesbahn abgelegt werden,
wobei zweite Fasern ersponnen werden und wobei diese zweiten Fasern auf der auf dem Ablageförderer transportierten ersten Vliesbahn zur zweiten Vliesbahn bzw. zum Laminat aus den beiden Vliesbahnen abgelegt werden,
wobei nach der Ablage der ersten Fasern und vor der Ablage der zweiten Fasern die erste Vliesbahn mit Heißluft vorverfestigt wird, wobei nach der Ablage der zweiten Fasern die zweite Vliesbahn bzw. das Laminat aus der ersten Vliesbahn und der zweiten Vliesbahn mit Heißluft vorverfestigt wird,
wobei das Laminat von dem Ablageförderer bzw. von dem Ablagesiebband an den weiteren Förderer bzw. an das Förderband übergeben wird und wobei die Heißluft-Vorverfestigungen mit der Maßgabe durchgeführt werden, dass das Laminat vor der Übergabe an den weiteren Förderer eine Festigkeit in Maschinenrichtung (MD) von 0,5 bis 5 N/5 cm, insbesondere von 0,7 bis 3,5 N/5 cm und vorzugsweise von 0,8 bis 3,5 N/5 cm aufweist.

Eine besonders bewährte Ausführungsform des erfindungsgemäßen Verfahrens zeichnet sich dadurch aus, dass die Fasern - insbesondere die Fasern des ersten Spinnbalkens und/oder die Fasern des zweiten Spinnbalkens - als Spunbond-Filamente bzw. Endlosfilamente ersponnen werden, insbesondere als Bikomponentenfilamente bzw. Multikomponentenfilamente ersponnen werden und vorzugsweise als gekräuselte Filamente abgelegt werden - insbesondere zur ersten Vliesbahn und/oder zur zweiten Vliesbahn - abgelegt werden. Gemäß besonders bevorzugter Ausführungsform der Erfindung werden die Fasern - insbesondere die Fasern des ersten Spinnbalkens und/oder die Fasern des zweiten Spinnbalkens - als Bikomponentenfilamente bzw. Multikomponentenfilamente mit exzentrischer Kern-Mantel-Konfiguration ersponnen.

Besonders bewährt haben sich im Rahmen der Erfindung Bikomponentenfilamente bzw. Multikomponentenfilamente mit exzentrischer Kern-Mantel-Konfiguration, bei denen der Mantel im Filamentquerschnitt über zumindest 20 %, insbesondere über zumindest 25 %, vorzugsweise über zumindest 30 %, bevorzugt über zumindest 35 % und sehr bevorzugt über zumindest 40 % sowie besonders bevorzugt über zumindest 45 % des Filamentumfanges eine konstante Dicke d bzw. eine im Wesentlichen konstante Dicke d aufweist. Sehr bevorzugt ist im Rahmen der Erfindung, dass der Mantel der Filamente über zumindest 50 %, vorzugsweise über zumindest 55 % und bevorzugt über zumindest 60 % des Filamentumfanges die konstante Dicke d bzw. die im Wesentlichen konstante Dicke d aufweist. Zweckmäßigerweise nimmt bei diesen Filamenten der Kern mehr als 50 %, insbesondere mehr als 55 %, vorzugsweise mehr als 60 %, bevorzugt mehr als 65 % der Fläche des Filamentquerschnittes der Filamente ein. Empfohlenermaßen ist der Kern dieser Filamente im Filamentquerschnitt gesehen kreissegmentförmig ausgebildet und weist bezüglich seines Umfanges einen kreisbogenförmigen bzw. einen im Wesentlichen kreisbogenförmigen Umfangsabschnitt auf sowie einen linearen bzw. im Wesentlichen linearen Umfangsabschnitt. Fernerhin ist bei diesen Filamenten bevorzugt, dass der Mantel der Filamente - im Filamentquerschnitt gesehen - außerhalb des Mantelbereiches mit der konstanten Dicke d kreissegmentförmig ausgebildet ist, wobei dieses Kreissegment bezüglich seines Umfanges einen kreisbogenförmigen bzw. im Wesentlichen kreisbogenförmigen Umfangsabschnitt aufweist sowie einen linearen bzw. im Wesentlichen linearen Umfangsabschnitt. Gemäß sehr empfohlener Ausführungsform beträgt die Dicke des Mantels dieser bevorzugten Filamente im Bereich der konstanten bzw. im Wesentlichen konstanten Dicke d des Mantels weniger als 10 %, insbesondere weniger als 8 % und vorzugsweise weniger als 7 % des Filamentdurchmessers D bzw. des größten Filamentdurchmessers D. Es liegt fernerhin im Rahmen der Erfindung, dass bei diesen bevorzugten Filamenten in Bezug auf den Filamentquerschnitt der Abstand a des Flächenschwerpunktes des Kerns von dem Flächenschwerpunkt des Mantels 5 % bis 45 %, insbesondere 6 % bis 40 % und vorzugsweise 6 % bis 36 % des Filamentdurchmessers D bzw. des größten Filamentdurchmessers D beträgt.

Eine besonders empfohlene Ausführungsform der Erfindung ist dadurch gekennzeichnet, dass die erfindungsgemäß erzeugten Fasern bzw. Filamente aus zumindest einem Polyolefin bestehen bzw. im Wesentlichen bestehen. Wenn Bikomponentenfilamente bzw. Multikomponentenfilamente im Rahmen der Erfindung erzeugt werden, handelt es sich vorzugsweise um Bikomponentenfilamente bzw. Multikomponentenfilamente, bei denen zumindest eine Komponente oder beide bzw. alle Komponenten aus zumindest einem Polyolefin bzw. im Wesentlichen aus zumindest einem Polyolefin bestehen. Bei der Erzeugung von Filamenten mit exzentrischer Kern-Mantel-Konfiguration besteht vorzugsweise zumindest der Mantel aus zumindest einem Polyolefin bzw. im Wesentlichen aus zumindest einem Polyolefin. Nach einer sehr bewährten Ausführungsform besteht der Mantel aus Polyethylen bzw. im Wesentlichen aus Polyethylen und besteht bevorzugt der Kern aus Polypropylen bzw. im Wesentlichen aus Polypropylen. Gemäß einer anderen empfohlenen Ausführungsform besteht der Kern aus zumindest einem Polyester bzw. im Wesentlichen aus zumindest einem Polyester und besteht der Mantel aus zumindest einem Polyolefin bzw. im Wesentlichen aus zumindest einem Polyolefin. Als Polyester wird im Rahmen der Erfindung bevorzugt Polyethylenterephthalat (PET) eingesetzt. Bei einer bevorzugten Ausführungsvariante besteht der Kern aus PET bzw. im Wesentlichen aus PET und besteht der Mantel aus Polyethylen bzw. im Wesentlichen aus Polyethylen. Eine weitere Ausführungsform ist dadurch gekennzeichnet, dass der Kern aus zumindest einem Polyester besteht bzw. im Wesentlichen besteht und dass der Mantel aus zumindest einem Copolyester besteht bzw. im Wesentlichen besteht. Es liegt im Rahmen der Erfindung, dass die Kunststoffkomponente des Mantels einen geringeren Schmelzpunkt aufweist als die Kunststoffkomponente des Kerns. Im Rahmen der Erfindung haben sich Fasern bzw. Filamente aus den oben genannten Kunststoffen ganz besonders bewährt. Insbesondere haben sich Bikomponentenfilamente bzw. Multikomponentenfilamente mit exzentrischer Kern-Mantel-Konfiguration bewährt, deren Mantel aus Polyethylen bzw. im Wesentlichen aus Polyethylen besteht und deren Kern aus Polypropylen bzw. im Wesentlichen aus Polypropylen besteht.

Eine sehr bewährte Ausführungsform der Erfindung zeichnet sich dadurch aus, dass die Komponenten der Filamente bzw. der Kern und/oder der Mantel der Filamente mit exzentrischer Kern-Mantel-Konfiguration aus zumindest einem Polymer aus der Gruppe "Polyolefin, Polyolefin-Copolymer, insbesondere Polyethylen, Polypropylen, Polyethylen-Copolymer, Polypropylen-Copolymer; Polyester, Polyester-Copolymer, insbesondere Polyethylenterephthalat (PET), PET-Copolymer, Polybutylenterephthalat (PBT), PBT-Copolymer, Polylactid (PLA), PLA-Copolymer" besteht/bestehen bzw. im Wesentlichen besteht/bestehen. Es liegt auch im Rahmen der Erfindung, dass für eine Komponente bzw. für den Kern und/oder den Mantel Mischungen bzw. Blends der vorgenannten Polymere eingesetzt werden können. Weiterhin liegt es im Rahmen der Erfindung, dass bei Endlosfilamenten mit exzentrischer Kern-Mantel-Konfiguration der Kunststoff im Mantel eine niedrigere Schmelztemperatur aufweist als der Kunststoff im Kern.

Vorzugsweise findet im Falle der Erzeugung eines Vliesstoffes bzw. eines einlagigen Vliesstoffproduktes die Heißluft-Vorverfestigung der Vliesbahn bei einer Heißlufttemperatur von 80 °C bis 200 °C, insbesondere von 100 °C bis 175 °C, vorzugsweise von 110 °C bis 150 °C sowie sehr bevorzugt von 115 °C bis 140 °C statt. Es empfiehlt sich weiterhin, dass die Heißluft bei der Heißluft-Vorverfestigung mit einem Heißluftmesser eine Geschwindigkeit von 1,9 bis 6 m/s, insbesondere von 2 bis 5 m/s und vorzugsweise von 2,2 bis 4,5 m/s aufweist.

Eine besonders empfohlene Ausführungsform des erfindungsgemäßen Verfahrens ist dadurch gekennzeichnet, dass zumindest eine erzeugte Vliesbahn, insbesondere die erste Vliesbahn und/oder das Laminat aus der ersten Vliesbahn und der zweiten Vliesbahn zunächst mittels eines Heißluftmessers und ausschließlich durch einen Heißluftofen mit Heißluft vorverfestigt wird. Dabei findet die Heißluft-Vorverfestigung durch das Heißluftmesser jeweils bei einer Heißlufttemperatur von 80 °C bis 200 °C, insbesondere von 100 °C bis 180 °C und vorzugsweise von 120 °C bis 170 °C sowie sehr bevorzugt von 120 °C bis 160 °C statt. Es empfiehlt sich weiterhin, dass die Heißluft bei der Heißluftvor-Verfestigung mit einem Heißluftmesser eine Geschwindigkeit von 1,9 bis 6 m/s, insbesondere von 2 bis 5,5 m/s und vorzugsweise von 2,2 bis 4,5 m/s aufweist.

Wenn die Heißluft-Vorverfestigung einer Vliesbahn bzw. eines Vliesstofflaminates nach einer Ausführungsform mit lediglich einem Vorverfestigungsaggregat, insbesondere mit lediglich einem Heißluftmesser stattfindet, so wird die Heißlufttemperatur in einem Bereich von 80 °C bis 250 °C, insbesondere von 110 °C bis 200 °C und vorzugweise von 120 °C bis 190 °C sowie sehr bevorzugt von 130 °C bis 180 °C durchgeführt. Es empfiehlt sich weiterhin, dass die Heißluft bei der Heißluft-Vorverfestigung mit einem Heißluftmesser eine Geschwindigkeit von 1,9 bis 8 m/s, insbesondere von 2 bis 5,5 m/s und vorzugsweise von 2,2 bis 5,5 m/s aufweist.

Es liegt im Rahmen der Erfindung, dass die Vliesbahn, insbesondere die erste Vliesbahn und/oder das Laminat aus einer ersten Vliesbahn und einer zweiten Vliesbahn mittels zumindest eines Heißluftofens mit Heißluft vorverfestigt wird, wobei diese Heißluft-Vorverfestigung mit Heißluft einer Temperatur von 110 °C bis 180 °C, insbesondere von 115 °C bis 170 °C und vorzugsweise von 120 °C bis 160 °C durchgeführt wird. Empfohlenermaßen weist die Heißluft bei dieser Heißluftverfestigung mit einem Heißluftofen eine Geschwindigkeit von 1 bis 2,5 m/s, insbesondere von 1,1 bis 1,9 m/s und bevorzugt von 1,2 bis 1,8 m/s auf.

Es liegt weiterhin im Rahmen der Erfindung, dass nach der Übergabe der Vliesbahn bzw. des Vlieslaminates von dem Ablageförderer auf den weiteren Förderer bzw. auf das Förderband eine Endverfestigung der Vliesbahn bzw. des Laminates stattfindet. Es hat sich bewährt, dass die Endverfestigung als Heißluft-Endverfestigung durchgeführt wird. Zweckmäßigerweise wird die Heißluft-Endverfestigung in einem Heißluftofen und/oder in einem Trommelofen und/oder in einem Doppelbandofen und/oder in einem Reihenthermobonder durchgeführt. Eine empfohlene Ausführungsform ist dadurch gekennzeichnet, dass die Endverfestigung in einem Heißluftofen durch through air bonding erfolgt. Es liegt weiterhin im Rahmen der Erfindung, dass es sich bei der Endverfestigung um eine Kombination einer Heißluft-Endverfestigung und einer Erwärmung des Vliesstoffes bzw. des Vlieslaminates mit elektromagnetischen Wellen (beispielsweise IR- oder Mikrowellen-Hochfrequenz-Erwärmung) handeln kann. Die Temperatur der Heißluft beträgt dabei zweckmäßigerweise mehr als 100 °C, bevorzugt mehr als 110 °C. Die Geschwindigkeit der Heißluft bei dieser Endverfestigung beträgt bewährtermaßen mehr als 1 m/s, bevorzugt mehr als 1,1 m/s. Es empfiehlt sich, dass die Heißluft-Endverfestigung mit der Maßgabe durchgeführt wird, dass die resultierende Vliesbahn bzw. das resultierende Laminat eine Festigkeit in Maschinenrichtung (MD) von mindestens 20 N/5 cm, vorzugsweise von mindestens 23 N/5 cm aufweist. Besonders bevorzugt hat die Vliesbahn bzw. das Laminat nach der Heißluft-Endverfestigung eine Festigkeit in Maschinenrichtung (MD) von mehr als 25 N/5 cm. - Bei der Erzeugung eines Vlieslaminates aus zwei Vliesbahnen mittels einer Zwei-Balken-Anlage weist das resultierende Vlieslaminat insbesondere eine Dicke von 0,40 mm bis 0,80 mm und bevorzugt von 0,45 mm bis 0,70 mm auf. Diese Dickenangaben beziehen sich insbesondere auf Vlieslaminate mit einem Flächengewicht von 12 bis 50 g/m².

Vorzugsweise wird im Rahmen des erfindungsgemäßen Verfahrens mit einer Produktionsgeschwindigkeit von mindestens 100 m/min, insbesondere von mindestens 200 m/min gearbeitet. Zweckmäßigerweise werden im Rahmen des erfindungsgemäßen Verfahrens Vliesstoffe bzw. Laminate mit einem Flächengewicht von 12 bis 50 g/m², bevorzugt von 20 bis 40 g/m² erzeugt.

Es liegt im Rahmen der Erfindung, dass der Titer der für die Vliesbahn bzw. für das Vlieslaminat eingesetzten Filamente zwischen 1 den und 12 den liegt. Gemäß einer sehr empfohlenen Ausführungsform liegt der Titer der Filamente zwischen 1,0 den und 2,5 den, insbesondere zwischen 1,5 den und 2,2 den und bevorzugt zwischen 1,8 den und 2,2 den. Vor allem Filamente mit dem Titer von 1,5 den bis 2,2 den und bevorzugt von 1,8 den bis 2,2 den haben sich im Rahmen der Erfindung ganz besonders bewährt.

Gemäß empfohlener Ausführungsform der Erfindung wird die Heißluft-Vorverfestigung in Förderrichtung hinter einem Spinnbalken mit zumindest zwei Heißluft-Vorverfestigungseinrichtungen durchgeführt, bevorzugt mit zumindest einem Heißluftmesser und mit zumindest einem Heißluftofen. Eine sehr bewährte Ausführungsform der Erfindung ist dadurch gekennzeichnet, dass zwischen zwei Heißluft-Vorverfestigungseinrichtungen, insbesondere zwischen einem Heißluftmesser und einem Heißluftofen ein Bereich des Ablageförderers vorgesehen ist, in dem keine oder nur eine sehr geringe Absaugung von Prozessluft stattfindet. Dieser Bereich wird im Rahmen der Erfindung als Sauglücke bzw. als Sauglückenbereich bezeichnet. Die Absauggeschwindigkeit ist hier entweder Null oder in etwa Null oder sie ist zumindest deutlich geringer als die Absauggeschwindigkeit v₂ im zweiten Absaugbereich und als die Absauggeschwindigkeit v₃ im Bereich der zweiten Heißluft-Vorverfestigungseinrichtung bzw. im Bereich des Heißluftofens. Wesentlich ist, dass der Sauglückenbereich an dem Ablageförderer bzw. an dem Ablagesiebband angeordnet ist. Wenn die Absauggeschwindigkeit v_{L} im Sauglückenbereich größer als Null ist, beträgt sie vorzugsweise 1 % bis 15 %, insbesondere 1,2 % bis 10 % und bevorzugt 1,4 % bis 8 % sowie sehr bevorzugt 1,7 % bis 3 % der Absauggeschwindigkeit v_{H} im vorgeschalteten Hauptabsaugbereich. Damit ist insbesondere das lokale Minimum der Sauggeschwindigkeit in dem Sauglückenbereich gemeint. Eine solche Sauglücke hat sich im Rahmen der Erfindung besonders bewährt. Es hat sich gezeigt, dass damit Vliesbahnen bzw. Vlieslaminate mit optimaler Dicke erzeugt werden können, denen nichtsdestoweniger eine ausreichende Festigkeit verliehen werden kann. Die Sauglücke hat fernerhin den Vorteil, dass hier zusätzlich eine weitere Vorverfestigungseinrichtung eingebracht werden kann, insbesondere in Form eines Walzenpaares bzw. Kompaktierwalzenpaares. Eine besonders bevorzugte Ausführungsform der Erfindung zeichnet sich somit dadurch aus, dass in den Sauglückenbereich ein Walzenpaar bzw. ein Kompaktierwalzenpaar eingeschwenkt werden kann und bei Bedarf auch wieder ausgeschwenkt bzw. entfernt werden kann. Die Länge des Sauglückenbereiches in Maschinenrichtung (MD) bzw. in Förderrichtung der Vliesbahn/des Laminates beträgt vorzugsweise 0,3 m bis 5 m, bevorzugt 1,0 m bis 4,5 m und insbesondere 1,2 m bis 4 m.

Der Erfindung liegt die Erkenntnis zugrunde, dass mit der erfindungsgemäßen Vorrichtung und mit dem erfindungsgemäßen Verfahren ein Vliesstoff bzw. ein Vlieslaminat mit den gewünschten Eigenschaften sehr gezielt und funktionssicher sowie relativ wenig aufwendig und insbesondere wenig energieaufwendig erzeugt werden kann. Dabei lassen sich vor allem High-Loft-Produkte einfach und problemlos erzeugen. Es können Vliesstoffe mit relativ großer Dicke und hoher Weichheit und nichtsdestoweniger ausreichender Festigkeit erzeugt werden. Vor allem weisen die erfindungsgemäß erzeugten Vliesstoffe eine ausreichende Festigkeit auf, um diese von dem Ablageförderer an den weiteren Förderer für die Endverfestigung zu übergeben. Außerdem zeichnen sich die erfindungsgemäß hergestellten Vliesstoffe durch eine hervorragende Abriebsfestigkeit bzw. Abrasionsbeständigkeit aus. Fernerhin können Vliesstoffe mit sehr homogener Oberfläche erzeugt werden, die quasi defektfrei ausgebildet sind und vor allem keine Filamentagglomerate aufgrund von Blow-Back-Effekten aufweisen. Das erfindungsgemäße Verfahren lässt sich auf verhältnismäßig einfache Weise und vor allem auf wenig energieaufwendige Weise durchführen.

Nachfolgend wird die Erfindung anhand einer lediglich ein Ausführungsbeispiel darstellenden Zeichnung näher erläutert. Es zeigen in schematischer Darstellung:
- Fig. 1: einen Vertikalschnitt durch eine erfindungsgemäße Vorrichtung zur Erzeugung eines Spunbond-Vliesstoffes,
- Fig. 2: den Gegenstand nach Fig. 1 im Bereich des Ablageförderers mit einem daran anschließenden weiteren Förderer bzw. Förderband,
- Fig. 3: einen Vertikalschnitt durch eine erfindungsgemäße Zwei-Balken-Anlage und
- Fig. 4: einen Schnitt durch ein bevorzugt im Rahmen der Erfindung eingesetztes Endlosfilament mit exzentrischer Kern-Mantel-Konfiguration.

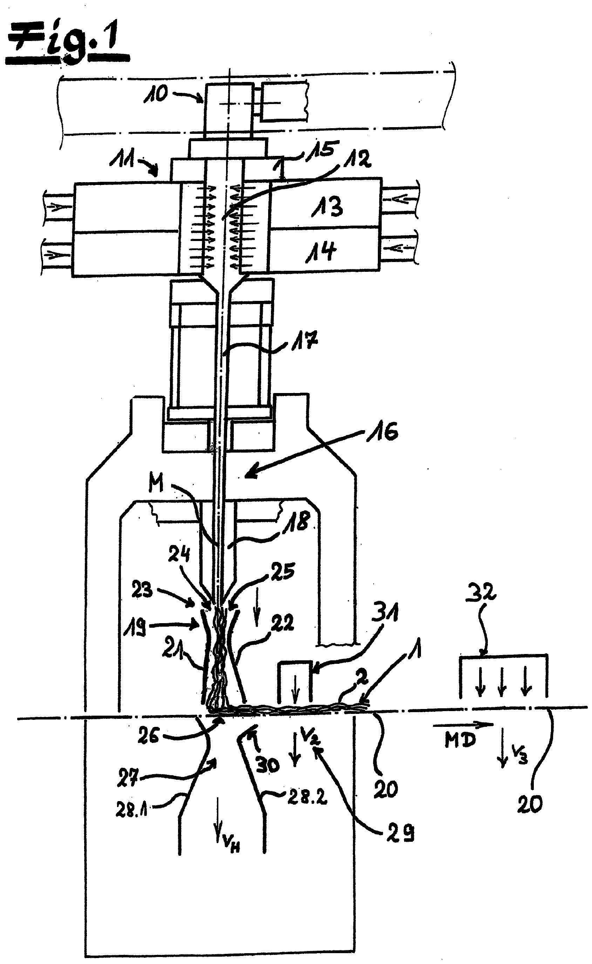

Die Fig. 1 zeigt eine erfindungsgemäße Vorrichtung zur Herstellung eines Vliesstoffes 1 mit zumindest einer Vliesbahn 2, 3 aus Fasern aus thermoplastischem Kunststoff. Bei den Fasern handelt es sich vorzugsweise und im Ausführungsbeispiel um Endlosfilamente F aus thermoplastischem Kunststoff. Bei der in Fig. 1 dargestellten Vorrichtung handelt es sich um eine Spunbond-Vorrichtung zur Erzeugung eines Vliesstoffes 1 aus Endlosfilamenten F.

Die Vorrichtung umfasst eine Spinneinrichtung 10 zum Erspinnen der Endlosfilamente F und diese ersponnenen Endlosfilamente F werden in eine Kühlvorrichtung 11 mit einer Kühlkammer 12 eingeführt. Bevorzugt und im Ausführungsbeispiel sind an zwei gegenüberliegenden Seiten der Kühlkammer 12 übereinander angeordnete Luftzufuhrkabinen 13, 14 angeordnet. Aus diesen übereinander angeordneten Luftzufuhrkabinen 13, 14 wird zweckmäßigerweise Luft unterschiedlicher Temperatur in die Kühlkammer 12 eingeführt. Empfohlenermaßen und im Ausführungsbeispiel ist zwischen der Spinneinrichtung 10 und der Kühlvorrichtung 11 eine Monomer-Absaugungseinrichtung 15 angeordnet. Mit dieser Monomer-Absaugungseinrichtung 15 können beim Spinnprozess auftretende störende Gase aus der Vorrichtung entfernt werden. Bei diesen Gasen kann es sich beispielsweise um Monomere, Oligomere bzw. Zersetzungsprodukte und dergleichen Substanzen handeln.

Der Kühlvorrichtung 11 ist bevorzugt und im Ausführungsbeispiel in Filamentströmungsrichtung eine Verstreckeinrichtung 16 zum Verstrecken der Endlosfilamente F nachgeschaltet. Vorzugsweise und im Ausführungsbeispiel weist die Verstreckeinrichtung 16 einen Zwischenkanal 17 auf, der die Kühlvorrichtung 11 mit einem Verstreckschacht 18 der Verstreckeinrichtung 16 verbindet. Nach besonders bevorzugter Ausführungsform und im Ausführungsbeispiel ist das Aggregat aus der Kühlvorrichtung 11 und der Verstreckeinrichtung 16 bzw. das Aggregat aus der Kühlvorrichtung 11, dem Zwischenkanal 17 und dem Verstreckschacht 18 als geschlossenes Aggregat ausgebildet und außer der Zufuhr von Kühlluft in der Kühlvorrichtung 11 erfolgt keine weitere Luftzufuhr von außen in dieses Aggregat.

An die Verstreckeinrichtung 16 schließt bevorzugt und im Ausführungsbeispiel in Filamentströmungsrichtung ein Diffusor 19 an, durch den die Endlosfilamente F geführt werden. Nach Durchlaufen des Diffusors 19 werden die Endlosfilamente F vorzugsweise und im Ausführungsbeispiel auf einem als Ablagesiebband 20 ausgebildeten Ablageförderer abgelegt. Das Ablagesiebband 20 ist bevorzugt und im Ausführungsbeispiel als endlos umlaufendes Ablagesiebband 20 ausgebildet. Das Ablagesiebband 20 ist zweckmäßigerweise luftdurchlässig ausgeführt, sodass eine Absaugung von Prozessluft von unten durch das Ablagesiebband 20 erfolgen kann.

Nach bewährter Ausführungsform und im Ausführungsbeispiel weist der Diffusor 19 bzw. der unmittelbar über dem Ablagesiebband 20 angeordnete Diffusor 19 zwei gegenüberliegende Diffusorwände auf, wobei zwei untere divergierende Diffusorwandabschnitte 21, 22 vorgesehen sind. Diese divergierenden Diffusorwandabschnitte 21, 22 sind vorzugsweise bezüglich der Mittelebene M der Vorrichtung bzw. des Diffusors 19 asymmetrisch ausgebildet. Zweckmäßigerweise und im Ausführungsbeispiel bildet der einlaufseitige Diffusorwandabschnitt 21 einen geringeren Winkel β mit der Mittelebene M aus als der auslaufseitige Diffusorwandabschnitt 22. Dabei ist der Winkel β, den der einlaufseitige Diffusorwandabschnitt 21 mit der Mittelebene M bildet, empfohlenermaßen mindestens 1 ° kleiner als der Winkel β, den der auslaufseitige Diffusorwandabschnitt 22 mit der Mittelebene M einschließt. Es liegt im Rahmen der Erfindung, dass die fördererseitigen bzw. siebbandseitigen Enden der divergierenden Diffusorwandabschnitte 21, 22 unterschiedliche Abstände e₁ und e₂ zu der Mittelebene M der Vorrichtung bzw. des Diffusors 19 aufweisen.

Der Abstand e₁ des siebbandseitigen Endes des einlaufseitigen Diffusorwandabschnittes 21 zu der Mittelebene M ist geringer als der Abstand e₂ des Endes des auslaufseitigen Diffusorwandabschnittes 22 zu der Mittelebene M. Die Begriffe einlaufseitig und auslaufseitig beziehen sich insbesondere auf die Förderrichtung des Ablagesiebbandes 20 bzw. auf die Förderrichtung der Vliesbahn 2, 3. - Nach bevorzugter Ausführungsform der Erfindung beträgt das Verhältnis der Abstände e₁:e₂ 0,6 bis 0,95, bevorzugt 0,65 bis 0,9 und insbesondere 0,7 bis 0,9.

Es liegt im Rahmen der Erfindung, dass an dem Einströmende 23 des Diffusors 19 zwei gegenüberliegende Sekundärlufteintrittsspalte 24, 25 vorgesehen sind, die jeweils an einer der beiden gegenüberliegenden Diffusorwände angeordnet sind. Vorzugsweise ist durch den in Bezug auf die Förderrichtung des Ablagesiebbandes 20 einlaufseitigen Sekundärlufteintrittsspalt 24 ein geringerer Sekundärluftvolumenstrom einführbar als durch den auslaufseitigen Sekundärlufteintrittsspalt 25. Dabei empfiehlt es sich, dass der Sekundärluftvolumenstrom des einlaufseitigen Sekundärlufteintrittsspaltes 24 um mindestens 5 %, bevorzugt um mindestens 10 % und insbesondere um mindestens 15 % geringer ist als der Sekundärluftvolumenstrom durch den auslaufseitigen Sekundärlufteintrittsspalt 25. Dieser Ausführungsform mit den unterschiedlichen Sekundärluftvolumenströmen an den Sekundärlufteintrittsspalten kommt im Hinblick auf die Lösung des technischen Problems besondere Bedeutung zu. Entsprechendes gilt auch für die asymmetrische Ausgestaltung des Diffusors 19. Weiterhin liegt es im Rahmen der Erfindung, dass zumindest eine Absaugeinrichtung vorhanden ist, mit der im Ablagebereich bzw. im Hauptablagebereich 26 der Filamente F in einem Hauptabsaugbereich 27 Luft bzw. Prozessluft durch das Ablagesiebband 20 gesaugt wird. Der Hauptabsaugbereich 27 ist zweckmäßigerweise und im Ausführungsbeispiel unterhalb des Ablageförderers bzw. unterhalb des Ablagesiebbandes 20 in einem Einlaufbereich des Ablagesiebbandes 20 und in einem Auslaufbereich des Ablagesiebbandes 20 jeweils durch eine Saugtrennwand 28.1, 28.2 begrenzt.

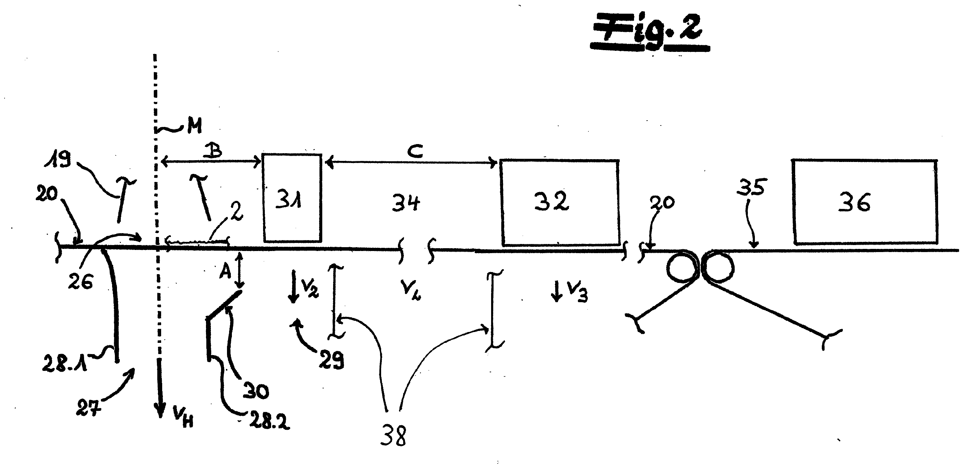

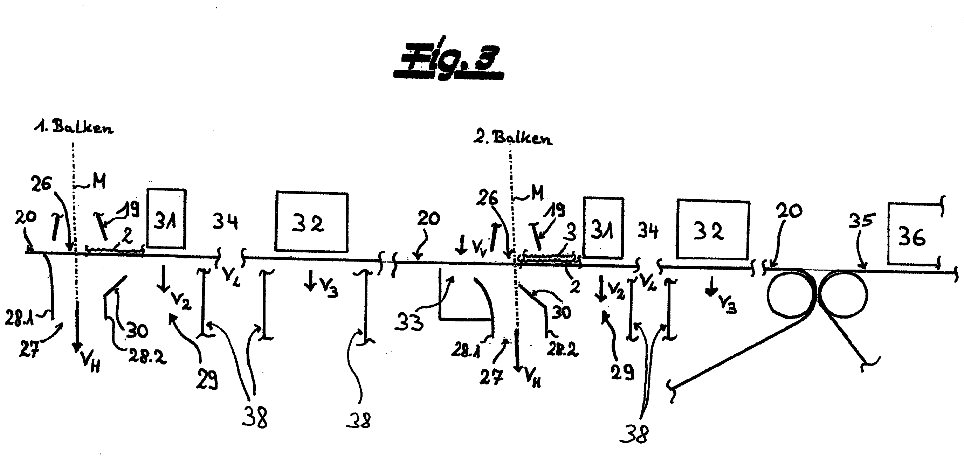

Gemäß einer empfohlenen Ausführungsform der Erfindung weist zumindest eine, insbesondere eine Saugtrennwand 28.1, 28.2 an ihrem fördererseitigen Ende einen als Spoilerabschnitt 30 ausgebildeten Trennwandabschnitt auf. Vorzugsweise und im Ausführungsbeispiel ist der Spoilerabschnitt 30 an der auslaufseitigen Saugtrennwand 28.2 vorgesehen. Der Spoilerabschnitt 30 ist hier gleichsam integraler Bestandteil der auslaufseitigen Saugtrennwand 28.2 und lediglich als abgewinkelter Trennwandabschnitt dieser Saugtrennwand 28.2 ausgebildet. Bei dieser empfohlenen Ausführungsform ist der Spoilerabschnitt 30 zweckmäßigerweise als schräg abgewinkelter Spoilerabschnitt 30 mit linearem bzw. im Wesentlichen linearem Querschnitt ausgeführt. Bevorzugt und im Ausführungsbeispiel nach den Figuren 1 und 2 sowie bei dem ersten linken Balken in der Fig. 3 ist der Spoilerabschnitt 30 zu der von der Mitte des Hauptabsaugbereiches 27 abgewandten Seite der zugeordneten Saugtrennwand 28.2 abgewinkelt. Dagegen ist der Spoilerabschnitt 30 zweckmäßigerweise und im Ausführungsbeispiel für den rechten Balken in der Fig. 3 zu der der Mitte der Hauptabsaugbereiches 27 zugewandten Seite der zugeordneten Saugtrennwand 28.2 abgewinkelt. Dieser unterschiedlichen Orientierung der Spoilerabschnitte 30 in einer Zwei-Balken-Anlage bzw. Mehrbalken-Anlage kommt im Rahmen der Erfindung ebenfalls besondere Bedeutung zu. - Der bevorzugt vorgesehene Spoilerabschnitt 30 gewährleistet, dass im Ausführungsbeispiel nach den Figuren 1, 2 und 3 (erster Balken, linke Seite) ein kontinuierlicher bzw. linearer stetiger Übergang der höheren Absauggeschwindigkeit v_{H} im Hauptabsaugbereich 27 zu der deutlich geringeren Absauggeschwindigkeit v₂ im zweiten, dem Hauptabsaugbereich 27 unmittelbar nachgeschalteten Absaugbereich 29 stattfindet. Im Ausführungsbeispiel der Fig. 3 (rechte Seite, zweiter Balken) gewährleistet der zu der Mitte des Hauptabsaugbereiches 27 hin abgewinkelte Spoilerabschnitt 30, dass die Absauggeschwindigkeit vv in einem dem Hauptabsaugbereich 27 vorgeschalteten Absaugbereich 33 zu der höheren Absauggeschwindigkeit v_{H} in dem Hauptabsaugbereich 27 kontinuierlich und linear stetig zunimmt und insbesondere kein abrupter Absauggeschwindigkeitsanstieg stattfindet.

Von besonderer Bedeutung ist im Rahmen der Erfindung bei dem abgewinkelten Spoilerabschnitt 30, dass dessen fördererseitiges Ende einen relativ großen Abstand A zum Ablageförderer bzw. zum Ablagesiebband 20 einhält. Dieser Abstand A beträgt vorzugsweise 10 mm bis 250 mm, bevorzugt 25 mm bis 200 mm, zweckmäßigerweise 28 mm bis 150 mm und insbesondere 30 mm bis 120 mm. Gemäß sehr bevorzugter Ausführungsform beträgt der Abstand A 20 mm bis 160 mm, bewährtermaßen 20 mm bis 150 mm und nach einer Ausführungsform 25 mm bis 150 mm. Von daher ist der fördererseitige Abstand des Endes der betreffenden Saugtrennwand 28.2 deutlich größer als entsprechende Abstände bei aus dem Stand der Technik bekannten Anlagen. Der Erfindung liegt die Erkenntnis zugrunde, dass durch Einhaltung dieses Abstandes A ein besonders weicher und kontinuierlicher Übergang der Absauggeschwindigkeiten stattfindet. Das ist deshalb von Vorteil, weil dadurch nachteilhafte Effekte auf die Vliesbahnfläche bzw. Vliesbahnoberfläche vermieden werden, die die Homogenität der Vliesbahn 2, 3 beeinträchtigen. Vor allem werden dadurch sogenannte Blow-Back-Effekte vermieden bzw. reduziert. Dabei handelt es sich um einen negativen Einfluss auf die Filamente der Vliesbahn 2, 3, der sich bei einem abrupten Absauggeschwindigkeitswechsel ergibt. So findet bei vielen aus dem Stand der Technik bekannten Anlagen bei einem abrupten Übergang von der hohen Absauggeschwindigkeit v_{H} im Hauptabsaugbereich 27 zu einer geringeren Absauggeschwindigkeit in dem folgenden Bereich des Ablagesiebbandes 20 ein Zurücksaugen bzw. Zurückziehen von Filamenten F aus dem geringer besaugten Bereich in den höher besaugten Bereich statt. Bei diesem Blow-Back-Effekt ergeben sich störende Filamentagglomerate und somit Inhomogenitäten in der Vliesbahn 2, 3. Der bevorzugt vorgesehene Spoilerabschnitt 30 gewährleistet somit weitgehend defektfreie Vliesbahnen 2, 3.

Erfindungsgemäß ist zumindest eine Heißluft-Vorverfestigungseinrichtung zur Heißluft-Vorverfestigung der Vliesbahn 2, 3 auf dem Ablageförderer bzw. auf dem Ablagesiebband 20 vorgesehen. - Bei der Ausführungsform nach Fig. 2 ist lediglich eine Spinneinrichtung 10 vorhanden und diese Vorrichtung kann als Ein-Balken-Anlage eingesetzt werden. Es empfiehlt sich, dass für diese Ein-Balken-Anlage eine Vorrichtung entsprechend Fig. 1 eingesetzt wird. Der Einfachheit halber ist in der Fig. 2 allerdings nur der untere Teil dieser Spunbond-Vorrichtung bzw. der untere Teil des Diffusors 19 dieser Vorrichtung dargestellt. Grundsätzlich kann die in Fig. 2 dargestellte Anlage bzw. Vorrichtung auch im Rahmen einer Mehr-Balken-Anlage zum Einsatz kommen. Zur Heißluft-Vorverfestigung ist vorzugsweise und im Ausführungsbeispiel dem Ablagebereich 26 zunächst ein Heißluftmesser 31 nachgeschaltet und diesem Heißluftmesser 31 ist in Förderrichtung des Ablagesiebbandes 20 ein Heißluftofen 32 nachgeschaltet. Beide Heißluft-Vorverfestigungen finden auf ein und demselben Ablagesiebband 20 statt.

Die Heißluft-Vorverfestigung mit dem Heißluftmesser 31 erfolgt bevorzugt und im Ausführungsbeispiel über dem zweiten Absaugbereich 29. Die Absauggeschwindigkeit v₂ in diesem zweiten Absaugbereich 29 beträgt bevorzugt und im Ausführungsbeispiel 15 % bis 50 %, insbesondere 25 % bis 40 % der Absauggeschwindigkeit v_{H} in dem Hauptabsaugbereich 27. Wie oben bereits dargelegt, gewährleistet der Spoilerabschnitt 30 an der auslaufseitigen Saugtrennwand 28.2 einen allmählichen kontinuierlichen Übergang der hohen Absauggeschwindigkeit v_{H} zu der deutlich geringeren Absauggeschwindigkeit v₂ in dem zweiten Absaugbereich 29. Empfohlenermaßen und im Ausführungsbeispiel wird auch unter dem Heißluftofen 32 Prozessluft abgesaugt bzw. dieser Ofen im Kreislaufprozess betrieben, und zwar mit einer Absaug- bzw. Prozessluftgeschwindigkeit v₃. Diese Absaug- bzw. Prozessluftgeschwindigkeit v₃ beträgt zweckmäßigerweise 5 % bis 30 %, insbesondere 7 % bis 25 % und beispielsweise 7 % bis 12 % der Absauggeschwindigkeit v_{H} im Hauptabsaugbereich 27. Bevorzugt nimmt die Absauggeschwindigkeit von v_{H} im Hauptabsaugbereich 27 über v₂ im zweiten Absaugbereich 29 bis v₃ unter dem Heißluftofen 32 ab (v_{H}>v₂>v₃). Gemäß einer Ausführungsform der Erfindung nimmt die Absauggeschwindigkeit durch das Ablagesiebband 20 vom Hauptabsaugbereich 27 über den zweiten Absaugbereich 29 bis zum Heißluftofen 32 kontinuierlich ab. Nach einer anderen Ausführungsform kann zwischen dem Heißluftmesser 31 und dem Heißluftofen 32 ein nicht besaugter Bereich bzw. ein lediglich gering besaugter Bereich des Ablagesiebbandes 20 angeordnet sein (sogenannte Sauglücke). Dabei kann die Absauggeschwindigkeit v_{L} in diesem Sauglückenbereich 34 entweder Null bzw. etwa Null betragen oder sie ist zumindest geringer als die Absauggeschwindigkeit v₂ unter dem Heißluftmesser 31 und bevorzugt auch geringer als die Absauggeschwindigkeit v₃ unter dem Heißluftofen 32. Ein solcher Sauglückenbereich 34 hat sich für viele Anwendungen bewährt. Der Erfindung liegt insoweit die Erkenntnis zugrunde, dass mit Hilfe dieses Sauglückenbereiches 34 eine relativ hohe gewünschte Dicke einer Vliesbahn 2, 3 problemlos aufrechterhalten werden kann und nichtsdestoweniger die erforderliche Festigkeit der Vliesbahn 2, 3 im Rahmen der Heißluft-Vorverfestigungen erzielt werden kann.

Es wurde bereits oben darauf hingewiesen, dass nach einer empfohlenen Ausführungsform der Erfindung der Sauglückenbereich 34 dazu genutzt wird, dass eine weitere Vorverfestigungseinrichtung für die Vliesbahn an dem Ablageförderer bzw. an dem Ablagesiebband 20 positioniert werden kann.

Dabei handelt es sich gemäß bevorzugter Ausführungsform der Erfindung um ein Walzenpaar bzw. um ein Kompaktierwalzenpaar zur Vorverfestigung. Dieses (in den Figuren nicht dargestellte) Walzenpaar kann bei Bedarf an den Ablageförderer bzw. an das Ablagesiebband 20 angeschwenkt werden und bei Bedarf auch wieder entfernt bzw. vom Kontakt zum Ablagesiebband 20 abgeschwenkt werden. Insoweit hat sich ein solcher Sauglückenbereich 34 insbesondere zwischen dem Heißluftmesser 31 und dem Heißluftofen 32 besonders bewährt.

Die Heißluft-Vorverfestigung der Vliesbahn 2, 3 mit dem Heißluftmesser 31 erfolgt bevorzugt und im Ausführungsbeispiel über einen Breitenbereich in Maschinenrichtung (MD) von 40 mm bis 200 mm, insbesondere von 40 mm bis 150 mm. Der Abstand der zumindest einen Heißluftdüse des Heißluftmessers 31 zur Oberfläche des Ablagesiebbandes 20 beträgt dabei empfohlenermaßen 2 mm bis 200 mm und insbesondere 3 mm bis 100 mm. Vorzugsweise erfolgt die Heißluft-Vorverfestigung mit dem Heißluftmesser 31 bei einer Heißlufttemperatur von 80 °C bis 250 °C und insbesondere bei einer Heißlufttemperatur von 100 °C bis 200 °C. Bevorzugt ist eine Heißlufttemperatur von 120 °C bis 190 °C. Bewährtermaßen weist die Heißluft bei der Heißluft-Vorverfestigung mit dem Heißluftmesser 31 eine Geschwindigkeit von 2 bis 5 m/s und bevorzugt von 2,2 bis 4,5 m/s auf. Der Abstand B des Heißluftmessers 31 zu der Mittelebene M der Vorrichtung beträgt insbesondere 100 mm bis 1.000 mm, vorzugsweise 110 mm bis 600 mm und bevorzugt 120 mm bis 550 mm. Der Abstand B wird dabei insbesondere zwischen der genannten Mittelebene M und der in Förderrichtung folgenden ersten Komponente bzw. Baukomponente des Heißluftmessers 31 gemessen.

In Förderrichtung hinter dem bevorzugt für die erste Heißluft-Vorverfestigung vorgesehenen Heißluftmesser 31 ist im Ausführungsbeispiel ein Heißluftofen 32 angeordnet. Der Abstand C zwischen dem Heißluftmesser 31 und dem Heißluftofen 32 beträgt zweckmäßigerweise - im Falle der Einrichtung eines Sauglückenbereiches 34 - 0,4 m bis 5,2 m. - Mit dem bevorzugt vorgesehenen Heißluftofen 32 wird die Vliesbahn 2, 3 über einen Breitenbereich in Maschinenrichtung (MD) bzw. in Förderrichtung von 280 mm bis 2.000 mm, vorzugsweise von 300 mm bis 1.500 mm mit Heißluft beaufschlagt. Die Heißluftaustrittsöffnungen des Heißluftofens 32 weisen dabei empfohlenermaßen zur Oberfläche des Ablagesiebbandes 20 einen Abstand von 12 mm bis 200 mm und vorzugsweise einen Abstand von 25 mm bis 120 mm auf. Zweckmäßigerweise wird die Vliesbahn 2, 3 in dem Heißluftofen 32 mit Heißluft einer Temperatur von 110 °C bis 180 °C, insbesondere von 115 °C bis 170 °C und vorzugsweise von 120 °C bis 160 °C vorverfestigt. Die Geschwindigkeit der Heißluft bei dieser Heißluft-Vorverfestigung in dem Heißluftofen 32 beträgt bewährtermaßen 1 bis 2,5 m/s, insbesondere 1,1 bis 1,9 m/s und vorzugsweise 1,2 bis 1,8 m/s. - Wenn im Rahmen der Erfindung ohne Sauglücke gearbeitet wird, beträgt der Abstand zwischen einem Heißluftmesser und dem nachgeschalteten Heißluftofen zweckmäßigerweise 0,3 m bis 3,0 m.

Es liegt im Übrigen im Rahmen der Erfindung, dass die Heißluft-Vorverfestigung mit dem Heißluftmesser 31 bei einer höheren Heißlufttemperatur stattfindet als die Heißluft-Vorverfestigung mit dem Heißluftofen 32. - Im Ausführungsbeispiel nach Fig. 2 wird die Vliesbahn nach der Vorverfestigung mit dem Heißluftofen 32 von dem Ablageförderer bzw. von dem Ablagesiebband 20 an den weiteren Förderer in Form des Förderbandes 35 übergeben. Zweckmäßigerweise und im Ausführungsbeispiel handelt es sich bei dem Förderband 35 um ein endlos umlaufendes Förderband 35. Nach sehr bevorzugter Ausführungsform und im Ausführungsbeispiel ist die Oberflächentemperatur des Förderbandes 35 im Übergabebereich der Vliesbahn 2, 3 bzw. im Bereich vor der Heißluft-Endverfestigung höher als die Oberflächentemperatur des Ablageförderers bzw. des Ablagesiebbandes 20 im Bereich der Übergabe der Vliesbahn 2, 3 an das Förderband 35. Zweckmäßigerweise ist die Oberflächentemperatur des Förderbandes 35 um mindestens 5 °C, vorzugsweise um mindestens 10 °C und bevorzugt um mindestens 15 °C höher als die genannte Oberflächentemperatur des Ablageförderers bzw. des Ablagesiebbandes 20 im Bereich der Übergabe der Vliesbahn 2, 3. Mit dem weiteren Förderer bzw. mit dem Förderband 35 wird die Vliesbahn 2, 3 einer Endverfestigung zugeführt, und zwar bevorzugt und im Ausführungsbeispiel einer Heißluft-Endverfestigung. Dazu ist zweckmäßigerweise und im Ausführungsbeispiel eine Heißluft-Endverfestigungseinrichtung vorgesehen, und zwar empfohlenermaßen in Form eines Endverfestigungs-Heißluftofens 36 (through air bonding). Zweckmäßigerweise wird die Vliesbahn 2, 3 in diesem Endverfestigungs-Heißluftofen 36 mit Heißluft einer Temperatur von 100 °C bis 170 °C, insbesondere von 110 °C bis 150 °C beaufschlagt. Die auf diese Weise endverfestigte Vliesbahn 2, 3 bzw. der auf diese Weise endverfestigte Vliesstoff kann dann seiner weiteren Verwendung zugeführt werden.

Wesentlich ist im Rahmen der Erfindung, dass die Heißluft-Vorverfestigung bzw. die Heißluft-Vorverfestigungen der Vliesbahn 2, 3 auf dem Ablageförderer bzw. auf dem Ablagesiebband 20 mit der Maßgabe durchgeführt werden, dass die Vliesbahn 2, 3 vor der Übergabe von dem Ablageförderer bzw. von dem Ablagesiebband 20 an den weiteren Förderer bzw. an das Förderband 35 eine Festigkeit in Maschinenrichtung (MD) von 0,5 bis 5 N/5 cm, insbesondere von 0,7 bis 3,5 N/5 cm und vorzugsweise von 0,8 bis 3,5 N/5 cm aufweist. Das kann im Rahmen der eingesetzten bzw. beschriebenen Heißluft-Vorverfestigungen problemlos realisiert werden.

In der Fig. 3 ist ein bevorzugtes Ausführungsbeispiel einer erfindungsgemäßen Vorrichtung in Form einer Zwei-Balken-Anlage mit zwei Spinneinrichtungen 10 dargestellt. Der Aufbau der jedem Balken bzw. jeder Spinneinrichtung 10 zugeordneten Vorrichtungskomponente entspricht bevorzugt und im Ausführungsbeispiel im Aufbau der in Fig. 1 dargestellten Spunbond-Vorrichtung oberhalb des Ablagesiebbandes 20. Der Einfachheit halber wurden in der Fig. 3 diese Vorrichtungskomponenten nicht vollständig dargestellt, sondern lediglich der untere Bereich des jeweiligen Diffusors 19. Mit der ersten Spunbond-Vorrichtungskomponente der Zwei-Balken-Anlage gemäß Fig. 3 werden Endlosfilamente F ersponnen und zur Vliesbahn 2 auf dem Ablagesiebband 20 abgelegt. Bevorzugt und im Ausführungsbeispiel werden mit einer zweiten Spunbond-Vorrichtungskomponente (zweiter Balken, rechte Seite von Fig. 3) ebenfalls Endlosfilamente F ersponnen und zur Vliesbahn 3 abgelegt, die auf der ersten Vliesbahn 2 zur Ablage kommt, sodass ein Vlieslaminat aus den beiden Vliesbahnen 2, 3 gebildet wird. Grundsätzlich können die beiden in der Fig. 3 dargestellten Vorrichtungskomponenten bzw. Spunbond-Vorrichtungskomponenten auch im Rahmen einer Mehrbalken-Anlage mit mehr als zwei Spinnbalken bzw. mit mehr als zwei Spinneinrichtungen 10 eingesetzt werden.

Vorzugsweise und im Ausführungsbeispiel nach Fig. 3 ist jeder Spunbond-Vorrichtungskomponente bzw. jedem Diffusor 19 zunächst ein Heißluftmesser 31 zur Heißluft-Vorverfestigung nachgeschaltet. Jedem der beiden Heißluftmesser 31 ist bevorzugt und im Ausführungsbeispiel zur weiteren Heißluft-Vorverfestigung ein Heißluftofen 32 nachgeschaltet. Die zum Ausführungsbeispiel der Fig. 2 angegebenen bevorzugten Parameter bzw. Parameterbereiche bezüglich des Heißluftmessers 31 und bezüglich des Heißluftofens 32 gelten vorzugsweise auch für die Heißluftmesser 31 und die Heißluftöfen 32 der Zwei-Balken-Anlage aus Fig. 3. Entsprechendes gilt auch für die Werte bzw. für die Verhältnisse/Größenverhältnisse der Geschwindigkeiten v_{H}, v₂, v_{L} und v₃.

Die beiden Balken bzw. Spunbond-Vorrichtungskomponenten der Fig. 3 unterscheiden sich in ihrem Hauptabsaugbereich 27 in Bezug auf die Anordnung des Spoilerabschnittes 30. Bei dem ersten Balken bzw. bei der ersten Spunbond-Vorrichtungskomponente auf der linken Seite ist der an die auslaufseitige Saugtrennwand 28.2 angeschlossene Spoilerabschnitt 30 zu der von der Mitte des Hauptabsaugbereiches 27 bzw. zu der von der Mittelebene M abgewandten Seite der zugeordneten Saugtrennwand 28.2 abgewinkelt. Dadurch wird ein kontinuierlicher und linearer stetiger Übergang der Absauggeschwindigkeiten von der Absauggeschwindigkeit v_{H} des Hauptabsaugbereiches 27 zu der deutlich geringeren Absauggeschwindigkeit v₂ des zweiten Absaugbereiches 29 erreicht. Bei dem zweiten Balken bzw. bei der zweiten Spunbond-Vorrichtungskomponente auf der rechten Seite der Fig. 3 ist der Spoilerabschnitt 30 ebenfalls an die auslaufseitige Saugtrennwand 28.2 des Hauptabsaugbereiches 27 angeschlossen. Hier ist der Spoilerabschnitt 30 aber bevorzugt und im Ausführungsbeispiel zur Mitte des Hauptabsaugbereiches 27 bzw. zur Mittelebene M hin abgewinkelt. Durch diese Ausgestaltung des Spoilerabschnittes 30 wird eine kontinuierlich und linear stetig zunehmende Absauggeschwindigkeit von der relativ geringen Absauggeschwindigkeit vv des vorgeschalteten Absaugbereiches 33 zu der deutlich höheren Absauggeschwindigkeit v_{H} des Hauptabsaugbereiches 27 erreicht.

Wesentlich ist im Rahmen der Erfindung, dass nach bevorzugter Ausführungsform und im Ausführungsbeispiel beide Vliesbahnen 2, 3 auf demselben Ablageförderer bzw. auf demselben Ablagesiebband 20 abgelegt werden und auch auf diesem Ablageförderer bzw. Ablagesiebband 20 allen Heißluft-Vorverfestigungen unterworfen werden. Erst im Anschluss daran wird das Vlieslaminat aus den beiden Vliesbahnen 2, 3 von dem Ablageförderer bzw. von dem Ablagesiebband 20 an den weiteren Förderer in Form des Förderbandes 35 übergeben und auf diesem Förderband 35 findet die Endverfestigung statt. Die im Zusammenhang mit der Fig. 2 zu der Heißluft-Endverfestigungseinrichtung angegebenen bevorzugten Merkmale und Parameter gelten auch für die Heißluft-Endverfestigungseinrichtung der Fig. 3. Entsprechendes gilt auch für die Temperaturen bzw. Oberflächentemperaturen des Ablageförderers bzw. Ablagesiebbandes 20 und des weiteren Förderers bzw. des Förderbandes 35.

Bevorzugt und im Ausführungsbeispiel nach Fig. 3 findet die Heißluft-Vorverfestigung der ersten Vliesbahn 2 und die Heißluft-Vorverfestigung des Laminates aus den beiden Vliesbahnen 2, 3 mit der Maßgabe statt, dass das Laminat vor der Übergabe an den weiteren Förderer bzw. an das Förderband 35 eine Festigkeit in Maschinenrichtung (MD) von 0,5 bis 5 N/5 cm, insbesondere von 0,7 bis 3,5 N/5 cm und vorzugsweise von 0,8 bis 3, 5 N/5 cm aufweist.

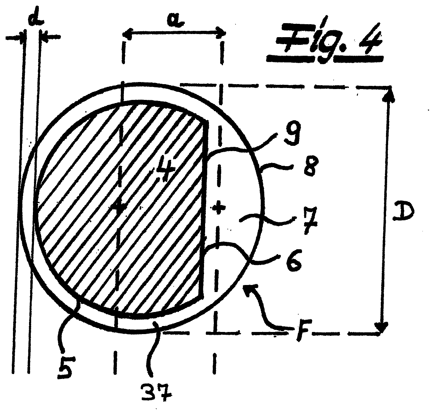

Nach sehr bevorzugter Ausführungsform werden mit der erfindungsgemäßen Vorrichtung und mit dem erfindungsgemäßen Verfahren Endlosfilamente F in Form von Bikomponentenfilamenten bzw. Multikomponentenfilamenten erzeugt und die Endlosfilamente F werden in Form von gekräuselten Filamenten F zur Vliesbahn 2, 3 abgelegt. Kräuselung meint hier insbesondere, dass die gekräuselten Filamente jeweils eine Kräuselung mit mindestens 1,5, vorzugsweise mit mindestens 2, bevorzugt mit mindestens 2,5 und sehr bevorzugt mit mindestens 3 Schlingen (loops) pro Zentimeter ihrer Länge aufweisen. Gemäß einer empfohlenen Ausführungsform weisen die gekräuselten Filamente jeweils eine Kräuselung von 2 bis 3 Schlingen (loops) pro Zentimeter ihrer Länge auf. Die Anzahl der Kräuselschlingen bzw. Kräuselbögen (loops) pro Zentimeter Länge der Filamente wird dabei insbesondere nach der japanischen Norm JIS L-1015-1981 gemessen, indem die Kräuselungen unter einer Vorspannung von 2 mg/den in (1/10 mm) gezählt werden, wobei die nicht-ausgestreckte Länge der Filamente zugrunde liegt. Es wird eine Empfindlichkeit von 0,05 mm verwendet, um die Anzahl der Kräuselschlingen zu bestimmen. Die Messung wird zweckmäßigerweise durchgeführt mit einem "Favimat"-Gerät der Firma TexTechno, Deutschland. Dazu wird auf die Veröffentlichung "Automatic Crimp Measurement on Staple Fibres", Denkendorf Colloqium, "Textile Mess- und Prüftechnik", 9.11.99, Dr. Ulrich Mörschel (insbesondere Seite 4, Fig. 4) verwiesen. Die Filamente bzw. die Filamentprobe werden/wird hierzu als Filamentknäuel vor einer weiteren Verfestigung von der Ablage bzw. von dem Ablagesiebband abgenommen und die Filamente werden vereinzelt und gemessen.

Die Kräuselung der Filamente wird vorzugsweise durch den Einsatz von Endlosfilamenten mit exzentrischer Kern-Mantel-Konfiguration erreicht. Vorzugsweise werden bei der Zwei-Balken-Anlage der Fig. 3 mit beiden Spunbond-Vorrichtungskomponenten bzw. mit beiden Balken derartige Bikomponentenfilamente mit exzentrischer Kern-Mantel-Konfiguration erzeugt.

Die Fig. 4 zeigt Bikomponentenfilamente mit exzentrischer Kern-Mantel-Konfiguration, die im Rahmen der Erfindung ganz besonders bevorzugt werden. Dabei ist in Fig. 4 ein Querschnitt durch ein Endlosfilament F mit der bevorzugten speziellen Kern-Mantel-Konfiguration dargestellt. Bei diesen Endlosfilamenten F weist der Mantel 37 im Filamentquerschnitt vorzugsweise und im Ausführungsbeispiel über mehr als 50 %, bevorzugt über mehr als 55 % des Filamentumfanges eine konstante Dicke d auf. Bevorzugt und im Ausführungsbeispiel nimmt der Kern 4 der Filamente F mehr als 65 % der Fläche des Filamentquerschnittes der Filamente F ein. Empfohlenermaßen und im Ausführungsbeispiel ist der Kern 4 - im Filamentquerschnitt gesehen - kreissegmentförmig ausgebildet. Zweckmäßigerweise und im Ausführungsbeispiel weist dieser Kern 4 bezüglich seines Umfanges einen kreisbogenförmigen Umfangsabschnitt 5 sowie einen linearen Umfangsabschnitt 6 auf. Bevorzugt und im Ausführungsbeispiel nimmt der kreisbogenförmige Umfangsabschnitt des Kerns 4 über 50 %, bevorzugt über 55 % des Umfanges des Kerns 4 ein. Zweckmäßigerweise und im Ausführungsbeispiel ist der Mantel 37 der Filamente F - im Filamentquerschnitt gesehen - außerhalb des Mantelbereiches mit der konstanten Dicke d kreissegmentförmig ausgebildet. Dieses Kreissegment 7 des Mantels 37 weist empfohlenermaßen und im Ausführungsbeispiel bezüglich seines Umfanges einen kreisbogenförmigen Umfangsabschnitt 8 sowie einen linearen Umfangsabschnitt 9 auf. Vorzugsweise beträgt die Dicke d bzw. die mittlere Dicke d des Mantels 37 im Bereich seiner konstanten Dicke 0,5 % bis 8 %, insbesondere 2 % bis 10 % des Filamentdurchmessers D. Im Ausführungsbeispiel mag die Dicke d des Mantels 37 im Bereich seiner konstanten Dicke 0,05 µm bis 3 µm betragen.

## Patentansprüche

1. Vorrichtung zur Herstellung eines Vliesstoffes (1) mit zumindest einer Vliesbahn (2, 3), wobei zumindest eine Spinneinrichtung (10) bzw. zumindest ein Spinnbalken zum Erspinnen von Fasern vorhanden ist, wobei ein Ablageförderer - insbesondere ein Ablagesiebband (20) - vorgesehen ist, auf dem die Fasern zur Vliesbahn (2, 3) ablegbar sind,
wobei zumindest eine Heißluft-Vorverfestigungseinrichtung zur Heißluft-Vorverfestigung der Vliesbahn (2, 3) auf dem Ablageförderer bzw. auf dem Ablagesiebband (20) vorgesehen ist,
wobei in Förderrichtung der Vliesbahn (2, 3) hinter dem Ablageförderer ein weiterer Förderer - insbesondere in Form eines Förderbandes (35) - zur Aufnahme der vorverfestigten Vliesbahn (2, 3) von dem Ablageförderer angeordnet ist, wobei zumindest eine Endverfestigungseinrichtung - insbesondere zumindest eine Heißluft-Endverfestigungseinrichtung - zur Endverfestigung bzw. zur Heißluft-Endverfestigung der Vliesbahn (2, 3) auf dem weiteren Förderer bzw. auf dem Förderband (35) vorgesehen ist,
wobei die Heißluft-Vorverfestigung der Vliesbahn (2, 3) auf dem Ablageförderer bzw. auf dem Ablagesiebband (20) mit der Maßgabe durchführbar ist, dass die Vliesbahn (2, 3) vor der Übergabe an den weiteren Förderer bzw. an das Förderband (35) eine Festigkeit in Maschinenrichtung (MD) von 0,5 bis 5 N/5 cm, insbesondere 0,7 bis 3,5 N/5 cm und vorzugsweise von 0,8 bis 3,5 N/5 cm aufweist
und wobei die Temperatur der Oberfläche des weiteren Förderers - insbesondere des Förderbandes (35) - in Förderrichtung vor der Heißluft-Endverfestigungseinrichtung höher ist als die Temperatur der Oberfläche des Ablageförderers bzw. des Ablagesiebbandes (20) im Übergabebereich der Vliesbahn bzw. des Laminates an den weiteren Förderer.

2. Vorrichtung nach Anspruch 1, wobei der Vliesstoff (1) ein Vlieslaminat aus zumindest zwei Vliesbahnen (2, 3) ist, wobei zumindest zwei Spinneinrichtungen (10) bzw. Spinnbalken vorgesehen sind,
wobei eine erste Spinneinrichtung (10) bzw. ein erster Spinnbalken zum Erspinnen von ersten Fasern vorhanden ist, wobei die ersten Fasern auf dem Ablageförderer, bzw. auf dem Ablagesiebband (20) zu einer ersten Vliesbahn (2) ablegbar sind,
wobei eine zweite Spinneinrichtung (10) bzw. ein zweiter Spinnbalken zum Erspinnen von zweiten Fasern vorhanden ist, wobei der zweite Spinnbalken dem ersten Spinnbalken in Förderrichtung des Ablageförderers nachgeschaltet ist und wobei die zweiten Fasern auf dem Ablageförderer bzw. auf der ersten Vliesbahn (2) zur zweiten Vliesbahn (3) ablegbar sind,
wobei zwischen dem ersten und dem zweiten Spinnbalken die zumindest eine Heißluft-Vorverfestigungseinrichtung als zumindest eine erste Heißluft-Vorfestigungseinrichtung zur Heißluft-Vorverfestigung der ersten Vliesbahn (2) vorgesehen ist,
wobei in Förderrichtung der Faserablage nach dem zweiten Spinnbalken zumindest eine zweite Heißluft-Vorverfestigungseinrichtung zur Heißluft-Vorverfestigung der zweiten Vliesbahn (3) bzw. des Laminates aus erster und zweiter Vliesbahn (2, 3) angeordnet ist,
wobei das Laminat von dem Ablageförderer an den weiteren Förderer, insbesondere in Form des Förderbandes (35) übergebbar ist bzw. übergeben wird,
wobei das Laminat mit der Endverfestigungseinrichtung, insbesondere mit der Heißluft-Endverfestigungseinrichtung auf den weiteren Förderer endverfestigt wird
und wobei die Heißluft-Vorverfestigung der Vliesbahn (2) bzw. des Laminates auf dem Ablageförderer mit der Maßgabe durchführbar ist, dass das Laminat vor der Übergabe an den weiteren Förderer eine Festigkeit in Maschinenrichtung (MD) von 0,5 bis 5 N/5 cm, insbesondere von 0,7 bis 3,5 N/5 cm und vorzugsweise von 0,8 bis 3,5 N/5 cm aufweist.

3. Vorrichtung nach einem der Ansprüche 1 oder 2, wobei zumindest eine Spinneinrichtung (10) bzw. zumindest ein Spinnbalken als Spunbond-Vorrichtung zur Erzeugung von Spunbond-Vliesstoffen aus Endlosfilamenten ausgebildet ist.

4. Vorrichtung nach einem der Ansprüche 1 bis 3, wobei zumindest eine der Spinneinrichtungen (10) bzw. zumindest einer der Spinnbalken zur Erzeugung von Bikomponentenfasern bzw. Multikomponentenfasern, insbesondere von Bikomponentenfilamenten bzw. Multikomponentenfilamenten eingerichtet ist.

5. Vorrichtung nach einem der Ansprüche 1 bis 4, wobei die Vorrichtung zur Herstellung zumindest eines Vliesstoffes bzw. zumindest einer Vliesbahn (2, 3) aus gekräuselten Fasern bzw. aus gekräuselten Endlosfilamenten ausgebildet ist.

6. Vorrichtung nach einem der Ansprüche 1 bis 5, wobei für die mit zumindest einem Spinnbalken ersponnenen Fasern zumindest eine Kühlvorrichtung (11) zur Kühlung der Fasern sowie zumindest eine an die Kühlvorrichtung (11) anschließende Verstreckeinrichtung (16) zur Verstreckung der Fasern und vorzugsweise zumindest ein an die Verstreckeinrichtung (16) anschließender Diffusor (19) vorgesehen ist.

7. Vorrichtung nach Anspruch 6, wobei das Aggregat aus der Kühlvorrichtung (11) und der Verstreckeinrichtung (16) als geschlossenes Aggregat ausgebildet ist und wobei in dieses Aggregat außer der Zufuhr von Kühlluft in der Kühlvorrichtung (11) keine weitere Luft von außen zuführbar ist.

8. Vorrichtung nach einem der Ansprüche 1 bis 7, wobei eine Heißluft-Vorverfestigungseinrichtung in Form zumindest eines Heißluftmessers (31) und/oder in Form zumindest eines Heißluftofens (32) ausgebildet ist.

9. Vorrichtung nach einem der Ansprüche 2 bis 7, wobei die erste Heißluft-Vorverfestigungseinrichtung zwischen dem ersten Spinnbalken und dem zweiten Spinnbalken in Form zumindest eines ersten Heißluftmessers (31) und/oder in Form zumindest eines ersten Heißluftofens (32) ausgebildet ist.

10. Vorrichtung nach Anspruch 9, wobei in Förderrichtung der ersten Vliesbahn (2) dem ersten Spinnbalken zunächst zumindest ein erstes Heißluftmesser (31) nachgeschaltet ist und wobei diesem ersten Heißluftmesser (31) vor dem zweiten Spinnbalken zumindest ein erster Heißluftofen (32) nachgeschaltet ist.

11. Vorrichtung nach einem der Ansprüche 2 bis 9, wobei die zweite Heißluft-Vorverfestigungseinrichtung hinter dem zweiten Spinnbalken in Form zumindest eines zweiten Heißluftmessers (31) und/oder in Form zumindest eines zweiten Heißluftofens (32) ausgebildet ist.

12. Vorrichtung nach Anspruch 11, wobei in Förderrichtung des Laminates dem zweiten Spinnbalken zunächst zumindest ein zweites Heißluftmesser (31) nachgeschaltet ist und diesem zweiten Heißluftmesser (31) zumindest ein zweiter Heißluftofen (32) nachgeschaltet ist.

13. Vorrichtung nach einem der Ansprüche 8 bis 12, wobei ein Heißluftmesser (31) die Vliesbahn (2) bzw. das Laminat mit Heißluft über einen Breitenbereich in Maschinenrichtung (MD) von 15 mm bis 300 mm, insbesondere von 30 mm bis 250 mm und vorzugsweise von 40 mm bis 200 mm und bevorzugt von 40 mm bis 150 mm beaufschlagt und/oder wobei der Abstand der zumindest einen Heißluftdüse des Heißluftmessers (31) zur Oberfläche des Ablageförderers bzw. zur Oberfläche des Ablagesiebbandes (20) 2 mm bis 200 mm, insbesondere 3 mm bis 100 mm beträgt.

14. Vorrichtung nach einem der Ansprüche 8 bis 13, wobei ein Heißluftofen (32) die Vliesbahn (2) bzw. das Laminat über einen Breitenbereich in Maschinenrichtung (MD) von 280 mm bis 2.000 mm, insbesondere von 290 mm bis 1.800 mm, und vorzugsweise von 300 mm bis 1.500 mm mit Heißluft beaufschlagt und/oder wobei die Heißluftaustrittsöffnungen des Heißluftofens (32) zur Oberfläche des Ablageförderers bzw. zur Oberfläche des Ablagesiebbandes (20) einen Abstand von 12 mm bis 200 mm, insbesondere von 20 mm bis 150 mm und bevorzugt von 25 mm bis 120 mm aufweisen.

15. Verfahren zur Herstellung eines Vliesstoffes (1) mit zumindest einer Vliesbahn (2, 3) wobei Fasern ersponnen werden und auf einem Ablageförderer, insbesondere auf einem Ablagesiebband (20) zu der Vliesbahn (2, 3) abgelegt werden,
wobei die Vliesbahn auf dem Ablageförderer mit Heißluft vorverfestigt wird und wobei die Vliesbahn (2, 3) von dem Ablageförderer bzw. von dem Ablagesiebband (20) an einen weiteren Förderer bzw. an ein Förderband (35) übergeben wird und dort mit einer Heißluft-Endverfestigungseinrichtung endverfestigt wird,
wobei die Heißluft-Vorverfestigung mit der Maßgabe durchgeführt wird, dass die Vliesbahn (2, 3) vor der Übergabe an den weiteren Förderer eine Festigkeit in Maschinenrichtung (MD) von 0,5 bis 5 N/5 cm, insbesondere von 0,7 bis 3,5 N/5 cm und vorzugsweise von 0,8 bis 3,5 N/5 cm aufweist
und wobei die Temperatur der Oberfläche des weiteren Förderers - insbesondere des Förderbandes (35) - in Förderrichtung vor der Heißluft-Endverfestigungseinrichtung höher ist als die Temperatur der Oberfläche des Ablageförderers bzw. des Ablagesiebbandes (20) im Übergabebereich der Vliesbahn bzw. des Laminates an den weiteren Förderer.

16. Verfahren nach Anspruch 15, wobei ein Vlieslaminat aus zumindest zwei Vliesbahnen (2, 3) erzeugt wird, wobei zumindest eine Vliesbahn (2, 3) gekräuselte Fasern aufweist, wobei erste Fasern ersponnen werden und auf einem Ablageförderer, insbesondere auf einem Ablagesiebband (20) zu einer ersten Vliesbahn (2) abgelegt werden,
wobei zweite Fasern ersponnen werden und wobei diese zweiten Fasern auf der ersten Vliesbahn (2) zur zweiten Vliesbahn (3) bzw. zum Laminat aus den beiden Vliesbahnen (2, 3) abgelegt werden,
wobei nach der Ablage der ersten Fasern und vor der Ablage der zweiten Fasern die erste Vliesbahn (2) mit Heißluft vorverfestigt wird, wobei nach der Ablage der zweiten Fasern die zweite Vliesbahn (3) bzw. das Laminat (1) aus der ersten Vliesbahn (2) und der zweiten Vliesbahn (3) mit Heißluft vorverfestigt wird,
wobei das Laminat (1) von dem Ablageförderer bzw. von dem Ablagesiebband (20) an den weiteren Förderer bzw. an das Förderband (35) übergeben wird und wobei die Heißluft-Vorverfestigungen mit der Maßgabe durchgeführt werden, dass das Laminat (1) vor bzw. bei der Übergabe an den weiteren Förderer eine Festigkeit in Maschinenrichtung (MD) von 0,5 bis 5 N/5 cm, insbesondere von 0,7 bis 3,5 N/5 cm und vorzugsweise von 0,8 bis 3,5 N/5 cm aufweist.

17. Verfahren nach einem der Ansprüche 15 oder 16, wobei die Fasern, insbesondere die Fasern des ersten Spinnbalkens und/oder die Fasern des zweiten Spinnbalkens als Spunbond-Filamente bzw. Endlosfilamente ersponnen werden, insbesondere als Bikomponentenfilamente bzw. Multikomponentenfilamente ersponnen werden und vorzugsweise als gekräuselte Filamente abgelegt werden, insbesondere zur ersten Vliesbahn (2) und/oder zur zweiten Vliesbahn (3) abgelegt werden.

18. Verfahren nach einem der Ansprüche 15 bis 17, wobei die Fasern, insbesondere die Fasern des ersten Spinnbalkens und/oder die Fasern des zweiten Spinnbalkens als Bikomponentenfilamente bzw. Multikomponentenfilamente mit exzentrischer Kern-Mantel-Konfiguration ersponnen werden.

19. Verfahren nach einem der Ansprüche 15 bis 18, wobei die Vliesbahn, insbesondere die erste Vliesbahn (2) und/oder das Laminat aus der ersten Vliesbahn (2) und der zweiten Vliesbahn (3) mittels eines Heißluftmessers (31) durch Heißluft vorverfestigt wird, wobei diese Heißluft-Vorverfestigung jeweils bei einer Heißlufttemperatur von 80 °C bis 250 °C, insbesondere von 100 °C bis 200 °C und vorzugsweise von 120 °C bis 190 °C stattfindet und/oder wobei die Heißluft bei der Heißluft-Vorverfestigung eine Geschwindigkeit von 1,9 bis 8 m/s, insbesondere von 2 bis 5,5 m/s und vorzugsweise von 2,2 bis 5,5 m/s aufweist.

20. Verfahren nach einem der Ansprüche 15 bis 19, wobei die Vliesbahn, insbesondere die erste Vliesbahn (2) und/oder das Laminat aus der ersten Vliesbahn (2) und der zweiten Vliesbahn (3) mittels zumindest eines Heißluftofens (32) mit Heißluft vorverfestigt wird und wobei diese Heißluft-Vorverfestigung mit Heißluft einer Temperatur von 110 °C bis 180 °C, insbesondere von 115 °C bis 170 °C und vorzugsweise von 120 °C bis 160 °C durchgeführt wird und/oder wobei die Heißluft bei dieser Heißluftverfestigung eine Geschwindigkeit von 1 bis 2,5 m/s, insbesondere von 1,1 bis 1,9 m/s und vorzugsweise von 1,2 bis 1,8 m/s aufweist.

21. Verfahren nach einem der Ansprüche 15 bis 20, wobei die Oberflächentemperatur des weiteren Förderers im Bereich vor der Heißluft-Endverfestigung bzw. im Bereich der Übergabe der Vliesbahn (2, 3) bzw. des Laminates höher ist als die Oberflächentemperatur des Ablageförderers bzw. des Ablagesiebbandes (20) im Bereich der Übergabe der Vliesbahn (2, 3) bzw. des Laminates an den weiteren Förderer und wobei die genannte Oberflächentemperatur des weiteren Förderers um mindestens 5 °C, vorzugsweise um mindestens 10 °C und bevorzugt um mindestens 15 °C höher ist als die genannte Oberflächentemperatur des Ablageförderers im Bereich der Übergabe der Vliesbahn (2, 3) bzw. des Laminates (1) an den weiteren Förderer.

## Claims

1. Device for producing a nonwoven fabric (1) comprising at least one nonwoven web (2, 3), wherein at least one spinning device (10) or at least one spinning beam is provided for spinning fibres, wherein a deposit conveyor - in particular a depositing foraminous belt (20) - is provided on which the fibres can be deposited to form the nonwoven web (2, 3),
wherein at least one hot-air pre-consolidating device is provided for hot-air pre-consolidation of the nonwoven web (2, 3) on the deposit conveyor or on the depositing foraminous belt (20),
wherein in the conveying direction of the nonwoven web (2, 3) downstream of the deposit conveyor a further conveyor - in particular in the form of a conveyor belt (35) - is provided for receiving the pre-consolidated nonwoven web (2, 3) from the deposit conveyor, wherein at least one final consolidating device - in particular at least one hot-air final consolidating device - is provided for final consolidation or for hot-air final consolidation of the nonwoven web (2, 3) on the further conveyor or on the conveyor belt (35),
wherein the hot-air pre-consolidation of the nonwoven web (2, 3) can be carried out on the deposit conveyor or on the depositing foraminous belt (20) provided that before transfer to the further conveyor or to the conveyor belt (35) the nonwoven web (2, 3) has a strength in the machine direction (MD) of 0.5 to 5 N/5 cm, in particular 0.7 to 3.5 N/5 cm and preferably of 0.8 to 3.5 N/5 cm
and wherein the temperature of the surface of the further conveyor - in particular the conveyor belt (35) - in the conveying direction upstream of the hot-air final consolidating device is higher than the temperature of the surface of the deposit conveyor or the depositing foraminous belt (20) in the transfer region of the nonwoven web or the laminate to the further conveyor.

2. Device according to Claim 1, wherein the nonwoven fabric (1) is a nonwoven laminate of at least two nonwoven webs (2, 3), wherein at least two spinning devices (10) or spinning beams are provided,
wherein a first spinning device (10) or a first spinning beam is provided for spinning first fibres, wherein the first fibres can be deposited on the deposit conveyor or on the depositing foraminous belt (20) to form a first nonwoven web (2),
wherein a second spinning device (10) or a second spinning beam is provided for spinning second fibres, wherein the second spinning beam is located downstream of the first spinning beam in the conveying direction of the deposit conveyor and wherein the second fibres can be deposited on the deposit conveyor or on the first nonwoven web (2) to form the second nonwoven web (3),
wherein the at least one hot-air pre-consolidating device is provided between the first and the second spinning beam as at least one first hot-air pre-consolidating device for hot-air pre-consolidation of the first nonwoven web (2),
wherein in the conveying direction of the fibre deposition downstream of the second spinning beam at least one second hot-air pre-consolidating device is provided for hot-air pre-consolidation of the second nonwoven web (3) or the laminate comprising first and second nonwoven web (2, 3),
wherein the laminate can be transferred or is transferred from the deposit conveyor to the further conveyor, in particular in the form of the conveyor belt (35),
wherein the laminate is finally consolidated with the final consolidating device, in particular with the hot-air final consolidating device on the further conveyor
and wherein the hot-air pre-consolidation of the nonwoven web (2) or the laminate can be carried out on the deposit conveyor provided that before the transfer to the further conveyor the laminate has a strength in the machine direction (MD) of 0.5 to 5 N/5 cm, in particular of 0.7 to 3.5 N/5 cm and preferably of 0.8 to 3.5 N/5 cm.

3. Device according to one of Claims 1 or 2, wherein at least one spinning device (10) or at least one spinning beam is configured as a spunbond device for producing spunbond nonwovens of continuous filaments.

4. Device according to one of Claims 1 to 3, wherein at least one of the spinning devices (10) or at least one of the spinning beams is adapted for producing bicomponent fibres or multicomponent fibres, in particular bicomponent filaments or multicomponent filaments.

5. Device according to one of Claims 1 to 4, wherein the device is configured for producing at least one nonwoven fabric or at least one nonwoven web (2, 3) of crimped filaments or crimped continuous filaments.

6. Device according to one of Claims 1 to 5, wherein at least one cooling device (11) for cooling the fibres as well as at least one stretching device (16) adjoining the cooling device (11) for stretching the fibres and preferably at least one diffuser (19) adjoining the stretching device (16) is provided.

7. Device according to Claim 6, wherein the unit comprising the cooling device (11) and the stretching device (16) is configured as a closed unit and wherein apart from the supply of cooling air into the cooling device (11) no further air can be supplied into this unit from outside.

8. Device according to one of Claims 1 to 7, wherein a hot-air pre-consolidating device is configured in the form of a hot air knife (31) and/or in the form of at least one hot-air oven (32).

9. Device according to one of Claims 2 to 7, wherein the first hot-air pre-consolidating device is formed between the first spinning beam and the second spinning beam in the form of at least one first hot-air knife (31) and/or in the form of at least one first hot-air oven (32).

10. Device according to Claim 9, wherein in the conveying direction of the first nonwoven web (2) initially at least one first hot-air knife (31) is located downstream of the first spinning beam and wherein at least one first hot-air oven (32) is located downstream of this first hot-air knife (31) upstream of the second spinning beam.

11. Device according to one of Claims 2 to 9, wherein the second hot-air pre-consolidating device is formed downstream of the second spinning beam in the form of at least one second hot-air knife (31) and/or in the form of at least one second hot-air oven (32).

12. Device according to Claim 11, wherein in the conveying direction of the laminate initially at least one second hot-air knife (31) is located downstream of the second spinning beam and at least one second hot-air oven (32) is located downstream of this second hot-air knife (31).

13. Device according to one of Claims 8 to 12, wherein a hot-air knife (31) applies hot air to the nonwoven web (2) or the laminate over a width range in the machine direction (MD) of 15 mm to 300 mm, in particular of 30 mm to 250 mm and preferably of 40 mm to 200 mm and preferably of 40 mm to 150 mm and/or wherein the distance of the at least one hot-air nozzle of the hot-air knife (31) to the surface of the deposit conveyor or to the surface of the depositing foraminous belt (20) is 2 mm to 200 mm, in particular 3 mm to 100 mm.

14. Device according to one of Claims 8 to 13, wherein a hot-air oven (32) applies hot air to the nonwoven web (2) or the laminate over a width range in the machine direction (MD) of 280 mm to 2,000 mm, in particular of 290 mm to 1,800 mm and preferably of 300 mm to 1,500 mm and/or wherein the hot air outlet openings of the hot-air oven (32) have a distance of 12 mm to 200 mm, in particular of 20 mm to 150 mm and preferably of 25 mm to 120 mm from the surface of the deposit conveyor or from the surface of the depositing foraminous belt (20).

15. Method for producing a nonwoven fabric (1) comprising at least one nonwoven web (2, 3), wherein fibres are spun and are deposited on a deposit conveyor, in particular on a depositing foraminous belt (20) to form the nonwoven web (2, 3),
wherein the nonwoven web is pre-consolidated with hot air on the deposit conveyor and wherein the nonwoven web (2, 3) is transferred from the deposit conveyor or from the depositing foraminous belt (20) to a further conveyor or to a conveyor belt (35) and is finally consolidated there using a hot-air final consolidating device,
wherein the hot-air pre-consolidation is carried out provided that before transfer to the further conveyor, the nonwoven web (2, 3) has a strength in the machine direction (MD) of 0.5 to 5 N/5 cm, in particular 0.7 to 3.5 N/5 cm and preferably of 0.8 to 3.5 N/5 cm,
and wherein the temperature of the surface of the further conveyor - in particular the conveyor belt (35) - in the conveying direction upstream of the hot-air final consolidating device is higher than the temperature of the surface of the deposit conveyor or the depositing foraminous belt (20) in the transfer region of the nonwoven web or the laminate to the further conveyor.

16. Method according to Claim 15, wherein a nonwoven laminate is produced from at least two nonwoven webs (2, 3), wherein at least one nonwoven web (2, 3) comprises crimped fibres, wherein first fibres are spun and deposited on a deposit conveyor, in particular on a depositing foraminous belt (20) to form a first nonwoven web (2),
wherein second fibres are spun and wherein these second fibres are deposited on the first nonwoven web (2) to form the second nonwoven web (3) or to form the laminate of the two nonwoven webs (2, 3),
wherein after deposition of the first fibres and before deposition of the second fibres, the first nonwoven web (2) is pre-consolidated with hot air, wherein after depositing the second fibres the second nonwoven web (3) or the laminate (1) of the first nonwoven web (2) and the second nonwoven web (3) is pre-consolidated with hot air,
wherein the laminate (1) is transferred from the deposit conveyor or from the depositing foraminous belt (20) to the further conveyor or to the conveyor belt (35) and wherein the hot-air pre-consolidations are carried out provided that before or during transfer to the further conveyor the laminate (1) has a strength in the machine direction (MD) of 0.5 to 5 N/5 cm, in particular 0.7 to 3.5 N/5 cm and preferably of 0.8 to 3.5 N/5 cm.

17. Method according to one of Claims 15 or 16, wherein the fibres, in particular the fibres of the first spinning beam and/or the fibres of the second spinning beam are spun as spunbond filaments or continuous filaments, in particular as bicomponent filaments or multicomponent filaments and preferably deposited as crimped filaments, in particular to form the first nonwoven web (2) and/or to form the second nonwoven web (3).

18. Method according to one of Claims 15 to 17, wherein the fibres, in particular the fibres of the first spinning beam and/or the fibres of the second spinning beam are spun as bicomponent filaments or multicomponent filaments having an eccentric core-sheath configuration.

19. Method according to one of Claims 15 to 18, wherein the nonwoven web, in particular the first nonwoven web (2) and/or the laminate of the first nonwoven web (2) and the second nonwoven web (3) is pre-consolidated by hot air by means of a hot-air knife (31), wherein this hot-air pre-consolidation takes place in each case at a hot-air temperature of 80°CC to 250°C, in particular of 100°C to 200°C and preferably of 120°C to 190°C and/or wherein the hot air during the hot-air pre-consolidation has a speed of 1.9 to 8 m/s, in particular of 2 to 5.5 m/s and preferably of 2.2 to 5.5 m/s.

20. Method according to one of Claims 15 to 19, wherein the nonwoven web, in particular the first nonwoven web (2) and/or the laminate of the first nonwoven web (2) and the second nonwoven web (3) is pre-consolidated with hot air by means of at least one hot-air oven (32), and wherein this hot-air pre-consolidation takes place with hot air at a temperature of 110°C to 180°C, in particular of 115°C to 170°C and preferably of 120°C to 160°C and/or wherein the hot air during this hot-air pre-consolidation has a speed of 1 to 2.5 m/s, in particular of 1.1 to 1.9 m/s and preferably of 1.2 to 1.8 m/s.

21. Method according to one of Claims 15 to 20, wherein the surface temperature of the further conveyor in the region upstream of the hot-air final consolidation or in the region of the transfer of the nonwoven web (2, 3) or the laminate is higher than the surface temperature of the deposit conveyor or the depositing foraminous belt (20) in the region of the transfer of the nonwoven web (2, 3) or the laminate to the further conveyor and wherein the said surface temperature of the further conveyor is at least 5°C, preferably at least 10°C and preferably at least 15°C higher than the said surface temperature of the deposit conveyor in the region of the transfer of the nonwoven web (2, 3) or the laminate (1) to the further conveyor.

## Revendications

1. Dispositif, destiné à produire un voile non-tissé (1) avec au moins une bande de non-tissé (2, 3), au moins un système de filage (10) ou au moins une barre de filage étant présent(e), pour filer des fibres, un convoyeur de dépose (notamment une toile perforée de dépose (20)) sur lequel (laquelle) les fibres peuvent être déposées en une bande de non-tissé (2, 3) étant prévu(e),
au moins un système de préconsolidation à l'air chaud étant prévu pour préconsolider à l'air chaud la bande de non-tissé (2, 3) sur le convoyeur de dépose ou sur la toile perforée de dépose (20),
dans la direction de convoyage de la bande de non-tissé (2, 3), derrière le convoyeur de dépose étant prévu un convoyeur supplémentaire (notamment sous la forme d'un convoyeur à bande (35)), pour réceptionner la bande de non-tissé (2, 3) préconsolidée à partir du convoyeur de dépose, au moins un système de consolidation finale (notamment au moins un système de consolidation finale à l'air chaud) étant prévu, pour la consolidation finale ou pour la consolidation finale à l'air chaud de la bande de non-tissé (2, 3) sur le convoyeur supplémentaire ou sur le convoyeur à bande (35),
la préconsolidation à l'air chaud de la bande de non-tissé (2, 3) sur le convoyeur de dépose ou sur la toile perforée de dépose (20) étant réalisable avec la consigne qu'avant d'être transférée sur le convoyeur supplémentaire ou sur le convoyeur à bande (35), la bande de non-tissé (2, 3) fasse preuve d'une résistance dans la direction de la machine (MD) de 0,5 à 5 N/5 cm, notamment de 0,7 à 3,5 N/5 cm et de préférence de 0,8 à 3,5 N/5 cm
et la température de la surface du convoyeur supplémentaire (notamment du convoyeur à bande (35)), à l'avant du système de consolidation à l'air chaud, dans la direction de convoyage étant supérieure à la température de la surface du convoyeur de dépose ou de la toile perforée de dépose (20) dans la zone de transfert de la bande de non-tissé ou du laminé sur le convoyeur supplémentaire.

2. Dispositif selon la revendication 1, le voile non-tissé (1) étant un non-tissé laminé constitué d'au moins deux bandes de non-tissé (2, 3), au moins deux systèmes de filage (10) ou barres de filage étant prévu(e)s,
un premier système de filage (10) ou une première barre de filage étant présent(e) pour filer des premières fibres, les premières fibres pouvant être déposées sur le convoyeur de dépose ou sur la toile perforée de dépose (20) en une première bande de non-tissé (2),
un deuxième système de filage (10) ou une deuxième barre de filage étant présent(e) pour filer des deuxièmes fibres, la deuxième barre de filage étant montée en aval de la première barre de filage, dans la direction de convoyage du convoyeur de dépose et les deuxièmes fibres pouvant être déposées sur le convoyeur de dépose ou sur la première bande de non-tissé (2) en la deuxième bande de non-tissé (3),
entre la première et la deuxième barre de filage étant prévu l'au moins un système de préconsolidation à l'air chaud sous la forme d'au moins un premier système de préconsolidation à l'air chaud, pour préconsolider à l'air chaud la première bande de non-tissé (2),
dans la direction de convoyage de la dépose de fibres, après la deuxième barre de filage étant prévu au moins un deuxième système de préconsolidation à l'air chaud, pour la préconsolidation à l'air chaud de la deuxième bande de non-tissé (3) ou du laminé constitué de la première et de la deuxième bande de non-tissé (2, 3),
le laminé étant transférable ou transféré par le convoyeur de dépose sur le convoyeur supplémentaire, notamment sous la forme du convoyeur à bande (35),
sur le convoyeur supplémentaire, le laminé étant soumis à une consolidation finale à l'aide du système de consolidation finale, notamment du système de consolidation finale à l'air chaud
et la préconsolidation à l'air chaud de la bande de non-tissé (2) ou du laminé étant réalisable sur le convoyeur de dépose avec la consigne qu'avant d'être transféré sur le convoyeur supplémentaire, le laminé fasse preuve d'une résistance dans la direction de la machine (MD) de 0,5 à 5 N/5 cm, notamment de 0,7 à 3,5 N/5 cm et de préférence, de 0,8 à 3,5 N/5 cm.

3. Dispositif selon l'une quelconque des revendications 1 ou 2, au moins un système de filage (10) ou au moins une barre de filage étant conçu(e) sous la forme d'un dispositif de filage-nappage, destiné à créer des voiles de non-tissé filés liés à partir de filaments continus.

4. Dispositif selon l'une quelconque des revendications 1 à 3, au moins l'un des systèmes de filage (10) ou au moins l'une des barres de filage étant aménagé(e) pour créer des fibres bicomposants ou des fibres multicomposants, notamment des filaments bicomposants ou des filaments multicomposants.

5. Dispositif selon l'une quelconque des revendications 1 à 4, le dispositif étant conçu pour produire au moins un voile non-tissé ou au moins une bande de non-tissé (2, 3) en fibres frisées ou en filaments continus frisés.

6. Dispositif selon l'une quelconque des revendications 1 à 5, pour les fibres filées avec au moins une barre de filage étant prévus au moins un dispositif de refroidissement (11), destiné à refroidir les fibres, ainsi qu'au moins un système d'étirage (16) se raccordant sur le dispositif de refroidissement (11), destiné à étirer les fibres et de préférence au moins un diffuseur (19) se raccordant sur le système d'étirage (16).

7. Dispositif selon la revendication 6, l'ensemble constitué du dispositif de refroidissement (11) et du système d'étirage (16) étant conçu sous la forme d'un ensemble fermé, et dans ledit ensemble, hormis l'apport d'air de refroidissement dans le dispositif de refroidissement (11), aucun air supplémentaire ne pouvant être apporté par l'extérieur.

8. Dispositif selon l'une quelconque des revendications 1 à 7, un système de préconsolidation à l'air chaud étant conçu sous la forme d'au moins une lame d'air chaud (31) et/ou sous la forme d'au moins un four à convection (32).

9. Dispositif selon l'une quelconque des revendications 2 à 7, le premier système de préconsolidation à l'air chaud étant conçu entre la première barre de filage et la deuxième barre de filage sous la forme d'au moins une lame d'air chaud (31) et/ou sous la forme d'au moins un four à convection (32).

10. Dispositif selon la revendication 9, dans la direction de convoyage de la première bande de non-tissé (2) étant montée au plus près en aval de la première barre de filage au moins une première lame d'air chaud (31) et en aval de ladite première lame d'air chaud (31), à l'avant de la deuxième barre de filage étant monté au moins un premier four à convection (32).

11. Dispositif selon l'une quelconque des revendications 2 à 9, le deuxième système de préconsolidation à l'air chaud derrière la deuxième barre de filage étant conçu sous la forme d'au moins une deuxième lame d'air chaud (31) et/ou sous la forme d'au moins un deuxième four à convection (32).

12. Dispositif selon la revendication 11, dans la direction de convoyage du laminé, au plus près derrière la deuxième barre de filage étant montée en aval au moins une deuxième lame d'air chaud (31) et en aval de ladite deuxième lame d'air chaud (31) étant monté au moins un deuxième four à convection (32).

13. Dispositif selon l'une quelconque des revendications 8 à 12, une lame d'air chaud (31) soumettant la bande de non-tissé (2) ou le laminé à de l'air chaud sur une plage de largeur en direction de la machine (MD) de 15 mm à 300 mm, notamment de 30 mm à 250 mm et de préférence de 40 mm à 200 mm et de manière préférentielle de 40 mm à 150 mm et/ou la distance entre l'au moins une buse à air chaud de la lame d'air chaud (31) et la surface du convoyeur de dépose ou la surface de la toile perforée de dépose (20) étant de 2 mm à 200 mm, notamment de 3 mm à 100 mm.

14. Dispositif selon l'une quelconque des revendications 8 à 13, un four à convection (32) soumettant la bande de non-tissé (2) ou le laminé à de l'air chaud sur une plage de largeur en direction de la machine (MD) de 280 mm à 2.000 mm, notamment de 290 mm à 1.800 mm, et de préférence de 300 mm à 1.500 mm et/ou les orifices de sortie d'air chaud du four à convection (32) présentant par rapport à la surface du convoyeur de dépose ou à la surface de la toile perforée de dépose (20) une distance de 12 mm à 200 mm, notamment de 20 mm à 150 mm et de préférence de 25 mm à 120 mm.

15. Procédé, destiné à produire un voile non-tissé (1) avec au moins une bande de non-tissé (2, 3) des fibres étant filées et déposées sur un convoyeur de dépose, notamment sur une toile perforée de dépose (20) pour obtenir la bande de non-tissé (2, 3),
la bande de non-tissé étant préconsolidée à l'air chaud sur le convoyeur de dépose et la bande de non-tissé (2, 3) étant transférée du convoyeur de dépose ou de la toile perforée de dépose (20) sur un convoyeur supplémentaire ou sur un convoyeur à bande (35) et y étant soumise à une consolidation finale par un système de consolidation finale à l'air chaud,
la préconsolidation à l'air chaud étant réalisée avec la consigne qu'avant d'être transférée sur le convoyeur supplémentaire, la bande de non-tissé (2, 3) fasse preuve d'une résistance dans la direction de la machine (MD) de 0,5 à 5 N/5 cm, notamment de 0,7 à 3,5 N/5 cm et de préférence de 0,8 à 3,5 N/5 cm
et la température de la surface du convoyeur supplémentaire (notamment du convoyeur à bande (35)), à l'avant du système de consolidation à l'air chaud, dans la direction de convoyage étant supérieure à la température de la surface du convoyeur de dépose ou de la toile perforée de dépose (20) dans la zone de transfert de la bande de non-tissé ou du laminé sur le convoyeur supplémentaire.

16. Procédé selon la revendication 15, un non-tissé laminé étant créé à partir d'au moins deux bandes de non-tissé (2, 3), au moins une bande de non-tissé (2, 3) comportant des fibres frisées, des premières fibres étant filées et déposées sur un convoyeur de dépose, notamment sur une toile perforée de dépose (20) pour obtenir une première bande de non-tissé (2),
des deuxièmes fibres étant filées et lesdites deuxièmes fibres étant déposées sur la première bande de non-tissé (2) pour obtenir la deuxième bande de non-tissé (3) ou le laminé constitué des deux bandes de non-tissé (2, 3),
après la dépose des premières fibres et avant la dépose des deuxièmes fibres, la première bande de non-tissé (2) étant préconsolidée avec de l'air chaud, après la dépose des deuxièmes fibres, la deuxième bande de non-tissé (3) ou le laminé (1) constitué de la première bande de non-tissé (2) et de la deuxième bande de non-tissé (3) étant préconsolidé avec de l'air chaud,
le laminé (1) étant transféré du convoyeur de dépose ou de la toile perforée de dépose (20) sur le convoyeur supplémentaire ou sur le convoyeur à bande (35) et les préconsolidations à l'air chaud étant réalisées avec la consigne, qu'avant le transfert sur le convoyeur supplémentaire, le laminé (1) fasse preuve d'une résistance dans la direction de la machine (MD) de 0,5 à 5 N/5 cm, notamment de 0,7 à 3,5 N/5 cm et de préférence de 0,8 à 3,5 N/5 cm.

17. Procédé selon l'une quelconque des revendications 15 ou 16, les fibres, notamment les fibres de la première barre de filage et/ou les fibres de la deuxième barre de filage étant filées sous la forme de filaments ou de filaments continus filés-liés, notamment de filaments bicomposants ou de filaments multicomposants et de préférence étant déposées en tant que filaments frisés, notamment pour obtenir la première bande de non-tissé (2) et/ou la deuxième bande de non-tissé (3).

18. Procédé selon l'une quelconque des revendications 15 à 17, les fibres, notamment les fibres de la première barre de filage et/ou les fibres de la deuxième barre de filage étant filées en tant que filaments bicomposants ou en tant que filaments multicomposants avec une configuration âme/enveloppe excentrique.

19. Procédé selon l'une quelconque des revendications 15 à 18, la bande de non-tissé, notamment la première bande de non-tissé (2) et/ou le laminé constitué de la première bande de non-tissé (2) et de la deuxième bande de non-tissé (3) étant préconsolidé(e)s à l'air chaud au moyen d'une lame d'air chaud (31), ladite préconsolidation à l'air chaud ayant lieu respectivement à une température de l'air chaud de 80 °C à 250 °C, notamment de 100 °C à 200 °C et de préférence de 120 °C à 190 °C et/ou lors de la préconsolidation à l'air chaud, l'air chaud présentant une vitesse de 1,9 à 8 m/s, notamment de 2 à 5,5 m/s et de préférence de 2,2 à 5,5 m/s.

20. Procédé selon l'une quelconque des revendications 15 à 19, la bande de non-tissé, notamment la première bande de non-tissé (2) et/ou le laminé constitué de la première bande de non-tissé (2) et de la deuxième bande de non-tissé (3) étant préconsolidé(e)s à l'air chaud au moyen d'au moins un four à convection (32) et ladite préconsolidation à l'air chaud étant réalisée avec de l'air chaud à une température de 110 °C à 180 °C, notamment de 115 °c à 170 °C et de préférence de 120 °C à 160 °C et/ou lors de ladite préconsolidation à l'air chaud, l'air chaud présentant une vitesse de 1 à 2,5 m/s, notamment de 1,1 à 1,9 m/s et de préférence de 1,2 à 1,8 m/s.

21. Procédé selon l'une quelconque des revendications 15 à 20, la température superficielle du convoyeur supplémentaire dans la zone de la préconsolidation finale à l'air chaud ou dans la zone du transfert de la bande de non-tissé (2, 3) ou du laminé étant supérieure à la température superficielle du convoyeur de dépose ou de la toile perforée de dépose (20) dans la zone du transfert de la bande de non-tissé (2, 3) ou du laminé sur le convoyeur supplémentaire et la température superficielle citée du convoyeur supplémentaire étant supérieure d'au moins 5 °C, de préférence d'au moins 10 °C et de manière préférentielle, d'au moins 15 °C à la température superficielle citée du convoyeur de dépose dans la zone du transfert de la bande de non-tissé (2, 3) ou du laminé (1) sur le convoyeur supplémentaire.
